# EUROPÄISCHE PATENTSCHRIFT

(11) **EP 2 536 768 B1**
(45) Veröffentlichungstag und Bekanntmachung des Hinweises auf die Patenterteilung: **08.04.2015**
(21) Anmeldenummer: 11702833.2
(22) Anmeldetag: 10.02.2011
(51) Int. Cl.: C08F 10/10

(54) **VERFAHREN ZUR HERSTELLUNG VON HOCHREAKTIVEN ISOBUTENHOMO- ODER -COPOLYMEREN**
METHOD FOR PRODUCING HIGHLY REACTIVE ISOBUTENE HOMO OR COPOLYMERS
PROCÉDÉ DE PRODUCTION D'HOMO- OU DE COPOLYMÈRES D'ISOBUTÈNE HAUTEMENT RÉACTIFS

(30) Priorität: 30.11.2010 EP 10193047; 19.03.2010 EP 10157068; 17.02.2010 EP 10153847
(43) Veröffentlichungstag der Anmeldung: 26.12.2012
(73) Patentinhaber: BASF SE, 67056 Ludwigshafen (DE)
(72) Erfinder: KÖNIG, Hannah Maria, 68161 Mannheim (DE); MÜHLBACH, Klaus, 67269 Grünstadt (DE); KIEFER, Matthias, 67061 Ludwigshafen (DE); KOSTJUK, Sergei V., Minsk 220096 (BY); VASILENKO, Irina, Minsk 220096 (BY); FROLOV, Alexander, Svisloch 213714 Osipovicheskii region (BY)
(86) Internationale Anmeldenummer: PCT/EP2011/051929
(87) Internationale Veröffentlichungsnummer: WO 2011/101281

(56) Entgegenhaltungen:
- DE-A1- 19 825 334
- US-A- 5 169 914
- M. BAHADUR, T.D. SHAFFER, J.R. ASHBAUGH: "Dimethylaluminum Chloride Catalyzed Living Isobutylene Polymerization", MACROMOLECULES, Bd. 33, 12. Februar 2000 (2000-02-12), Seiten 9548-9552, XP002636748,
- Y. LI, Y. WU, X. XU, L. LIANG, G. WU: "Electron-Pair-Donor Reaction Order in the Cationic Polymerization of Isobutylene Coinitiated by AlCl3", JOURNAL OF POLYMER SCIENCE: PART A: POLYMER CHEMISTRY, Bd. 45, Nr. 14, 15. Juli 2007 (2007-07-15) , Seiten 3053-3061, XP002636749, DOI: 10.1002/pola.22061
- L. AMBROZ, Z. ZLAMAL: "Donor-Acceptor Interactions in Cationic Polymerization. II. Influence of Some Bases on Polymerization of Isobutylene", JOURNAL OF POLYMER SCIENCE, Bd. 30, 10. März 2003 (2003-03-10), Seiten 381-389, XP002636750,

## Beschreibung

Die vorliegende Erfindung betrifft ein neues Verfahren zur Herstellung von hochreaktiven Isobutenhomo- oder -copolymeren mit einem Gehalt an terminalen Vinyliden-Doppelbindungen pro Polyisobuten-Kettenende von wenigstens 50 Mol-%. Weiterhin betrifft die vorliegende Erfindung neue Isobutenpolymere.

Unter hochreaktiven Isobutenhomo- oder -copolymeren versteht man im Unterschied zu den sogenannten niedrigreaktiven Polymeren solche Polyisobutene, die einen hohen Gehalt an terminal angeordneten ethylenischen Doppelbindungen (α-Doppelbindungen) enthalten, und zwar in der Praxis meist von wenigstens 80 Mol-%, bezogen auf die einzelnen Kettenenden der Polyisobuten-Makromoleküle. Unter Vinylidengruppen werden im Sinne der vorliegenden Anmeldung solche Doppelbindungen verstanden, deren Lage im Polyisobuten-Makromolekül durch die allgemeine Formel 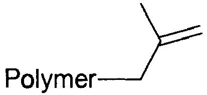 beschrieben wird, d.h. die Doppelbindung befindet sich in der Polymerkette in einer α-Stellung. "Polymer" steht für den um eine Isobuteneinheit verkürzten Polyisobutenrest. Die Vinylidengruppen zeigen die höchste Reaktivität, beispielsweise bei der thermischen Addition an sterisch anspruchsvolle Reaktionspartner wie Maleinsäureanhydrid, wohingegen eine weiter im Inneren der Makromoleküle liegende Doppelbindung in den meisten Fällen keine oder geringere Reaktivität bei Funktionalisierungsreaktionen zeigt. Hochreaktive Polyisobutene werden unter anderem als Zwischenprodukte zur Herstellung von Additiven für Schmier- und Kraftstoffe verwendet, wie dies zum Beispiel in der DE-A 27 02 604 beschrieben wird.

Derartige hochreaktive Polyisobutene sind beispielsweise nach dem Verfahren der DE-A 27 02 604 durch kationische Polymerisation von Isobuten in flüssiger Phase in Gegenwart von Bortrifluorid als Katalysator erhältlich. Nachteilig hierbei ist, dass die dabei erhaltenen Polyisobutene eine relativ hohe Polydispersität aufweisen. Die Polydispersität ist ein Maß für die Molekulargewichtsverteilung der erhaltenen Polymerketten und entspricht dem Quotient aus gewichtsmittlerem Molekulargewicht M_{w} und zahlenmittlerem Molekulargewicht Mₙ (PDI = M_{w}/Mₙ).

Polyisobutene mit einem ähnlich hohen Anteil an endständigen Doppelbindungen, jedoch mit einer engeren Molekulargewichtsverteilung sind beispielsweise nach dem Verfahren der EP-A 145 235, US 5 408 018 sowie WO 99/64482 erhältlich, wobei die Polymerisation in Gegenwart eines desaktivierten Katalysators, zum Beispiel eines Komplexes von Bortrifluorid mit Alkoholen und/oder Ethern, erfolgt.

Hochreaktive Polyisobutene sind auch durch lebende kationische Polymerisation von Isobuten und anschließender Dehydrohalogenierung des erhaltenen Polymerisationsprodukts erhältlich, beispielsweise gemäß dem Verfahren aus der US 5 340 881. Ein solches Verfahren ist jedoch aufwendig, da die mit der lebenden kationischen Polymerisation eingeführte Halogenendgruppe in einem separaten Schritt abgespalten werden muß, um die Doppelbindung zu generieren.

Es ist weiterhin seit langem bekannt, dass auch die Lewis-Säure Aluminiumtrichlorid als Polymerisationskatalysator für Isobuten verwendet werden kann, beispielsweise aus High Polymers, Band XXIV (Teil 2), S. 713-733 (Herausgeber: Edward C. Leonard), Verlag J. Wiley & Sons, New York, 1971.

In dem Literaturartikel "Cationic polymerization using heteropolyacid salt catalysts" in Topics in Catalysis Vol. 23, S. 175-181 (2003) weisen James D. Burrington et al. darauf hin, dass mit Aluminiumtrichlorid als Polymerisationskatalysator für Isobuten lediglich niedrigreaktive Polyisobutene mit einem niedrigen Gehalt an endständigen Vinyliden-Doppelbindungen (α-Doppelbindungen) erhalten werden können. So wird auf S. 178 in Table 1 dieses Literaturartikels ein Beispiel eines mit AlCl₃ hergestellen Polyisobutens angegeben, das ein zahlenmittleres Molekulargewicht Mₙ von 1000-2000, eine Polydispersität M_{w}/Mₙ von 2,5-3,5 und einen Gehalt an Vinyliden-Isomer (α-Doppelbindung) von nur 5 % (neben 65 % "Tri", 5 % "β" und 25 % "Tetra") aufweist.

In dem Literaturartikel "Novel initiating system based on AlCl3 etherate for quasiliving cationic polymerization of styrene" in Polymer Bulletin Vol. 52, S. 227-234 (2004) beschreiben Sergei V. Kostjuk et al. ein Katalysatorsystem aus 2-Phenyl-2-propanol und einem Aluminiumtrichlorid-Di-n-butylether-Komplex zur Polymerisation von Styrol. Die Polydispersitäten M_{w}/Mₙ der so hergestellen Styrol-Polymerisate betragen "∼2,5" (s. Summary) bzw. "∼3" (s. S. 230).

Das Dokument "Interactions in Cationic Polymerization. II. Influence of Some Bases on Polymerization of Isobutylene", Journal of Polymer Science 30, 381-389 (2003) offenbart die Polymerisation von Isobuten mit AlCl₃ in Ethylchlorid.

Aufgabe der vorliegenden Erfindung war es, ein Verfahren zur Herstellung von hochreaktiven Isobutenhomo- oder -copolymeren mit einem Gehalt an endständigen Vinyliden-Doppelbindungen pro Polyisobuten-Kettenende von wenigstens 80 Mol-% und gleichzeitig mit einer engen Molekulargewichtsverteilung (d.h. niedrigen Polydispersitäten) in akzeptablen Ausbeiten bereitzustellen. Das verwendete Katalysatorsystem soll dabei ausreichend aktiv, langlebig, unproblematisch in der Handhabung und störungsunanfällig sein.

Die Aufgabe wurde gelöst durch ein Verfahren nach Anspruch 1 zur Herstellung von hochreaktiven Isobutenhomo- oder -copolymeren mit einem Gehalt an terminalen Vinyliden-Doppelbindungen pro Polyisobuten-Kettenende von wenigstens 50 Mol-%, welches dadurch gekennzeichnet ist, dass man Isobuten oder ein Isobuten enthaltendes Monomerengemisch in Gegenwart eines als Polymerisationskatalysator wirksamen Aluminiumtrihalogenid-Donor-Komplexes oder eines Aluminumalkylhalogenid-Donor-Komplexes poly-merisiert, welcher als Donor eine organische Verbindung mit mindestens einer Ether-Funktion oder einer Carbonsäureester-Funktion enthält.

Unter Isobutenhomopolymeren versteht man im Rahmen der vorliegenden Erfindung solche Polymere, die bezogen auf das Polymer zu wenigstens 98 Mol-%, vorzugsweise zu wenigstens 99 Mol-% aus Isobuten aufgebaut sind. Dementsprechend versteht man unter Isobutencopolymeren solche Polymere, die mehr als 2 Mol-% Monomere einpolymerisiert enthalten, die von Isobuten verschieden sind, beispielsweise lineare Butene.

Im Rahmen der vorliegenden Erfindung gelten für generisch definierte Reste folgende. Definitionen:
Ein C₁- bis C₈-Alkylrest ist ein linearer oder verzweigter Alkylrest mit 1 bis 8 Kohlenstoffatomen. Beispiele hierfür sind Methyl, Ethyl, n-Propyl, Isopropyl, n-Butyl, 2-Butyl, Isobutyl, tert.-Butyl, Pentyl, 1-Methylbutyl, 2-Methylbutyl, 3-Methylbutyl, 2,2-Dimethylpropyl, 1-Ethylpropyl, n-Hexyl, 1,1-Dimethylpropyl, 1,2-Dimethylpropyl, 1-Methylpentyl, 2-Methylpentyl, 3-Methyl-pentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methyl-propyl, n-Heptyl, n-Octyl und dessen Konstitutionsisomere wie 2-Ethylhexyl. Derartige C₁- bis C₈-Alkylreste können auch in geringem Umfang Heteroatome wie Sauerstoff, Stickstoff oder Halogenatome, beispielsweise Chlor, und/oder nicht-protische funktionelle Gruppen wie beispielsweise Carboxylestergruppen, Cyanogruppen oder Nitrogruppen enthalten.
Ein C₁- bis C₂₀-Alkylrest ist ein linearer oder verzweigter Alkylrest mit 1 bis 20 Kohlenstoffatomen. Beispiele hierfür sind die oben genannten C₁- bis C₈-Alkylreste und darüber hinaus n-Nonyl, iso-Nonyl, n-Decyl, 2-Propylheptyl, n-Undecyl, n-Dodecyl, n-Tridecyl, iso-Tridecyl, n-Tetradecyl, n-Hexadecyl, n-Octadecyl und n-Eicosyl. Derartige C₁- bis C₂₀-Alkylreste können auch in geringem Umfang Heteroatome wie Sauerstoff, Stickstoff oder Halogenatome, beispielsweise Chlor, und/oder nicht-protische funktionelle Gruppen wie beispielsweise Carboxylestergruppen, Cyanogruppen oder Nitrogruppen enthalten.
Ein C₅- bis C₈-Cycloalkylrest ist ein gesättigter cyclischer Rest, der Alkylseitenketten enthalten kann. Beispiele hierfür sind Cyclopentyl, 2- oder 3-Methylcyclopentyl, 2,3-, 2,4- oder 2,5-Dimethylcyclopentyl, Cyclohexyl, 2-, 3- oder 4-Methylcyclohexyl, 2,3-, 2,4-, 2,5-, 2,6-, 3,4-, 3,5- oder 3,6-Dimethylcyclohexyl, Cylcoheptyl, 2-, 3- oder 4-Methylcycloheptyl, Cyclooctyl, 2-, 3-, 4- oder 5-Methylcyclooctyl. Derartige C₅- bis C₈-Cycloalkylreste können auch in geringem Umfang Heteroatome wie Sauerstoff, Stickstoff oder Halogenatome, beispielsweise Chlor, und/oder nicht-protische funktionelle Gruppen wie beispielsweise Carboxylestergruppen, Cyanogruppen oder Nitrogruppen enthalten.
Ein C₆- bis C₂₀-Arylrest bzw. ein C₆- bis C₁₂-Arylrest steht vorzugsweise für gegebenenfalls substituiertes Phenyl, gegebenenfalls substituiertes Naphthyl, gegebenenfalls substituiertes Anthracenyl oder gegebenenfalls substituiertes Phenanthrenyl. Derartige Arylreste können 1 bis 5 nicht-protische Substituenten oder nicht-protische funktionelle Gruppen tragen, beispielsweise C₁- bis C₈-Alkyl, C₁- bis C₈-Halogenalkyl wie C₁- bis C₈-Chloralkyl oder C₁- bis C₈-Fluoralkyl, Halogen wie Chlor oder Fluor, Nitro, Cyano oder Phenyl. Beispiele für solche Arylreste sind Phenyl, Naphthyl, Biphenyl, Anthracenyl, Phenanthrenyl, Tolyl, Nitrophenyl, Chlorphenyl, Dichlorphenyl, Pentafluorphenyl, Pentachlorphenyl, (Trifluormethyl)phenyl, Bis(tri-fluormethyl)phenyl, (Trichlor)methylphenyl und Bis(trichlormethyl)phenyl.
Ein C₇- bis C₂₀-Arylalkylrest bzw. ein C₇- bis C₁₂-Arylalkylrest steht vorzugsweise für gegebenenfalls substituiertes C₁- bis C₄-Alkylphenyl wie Benzyl, o-, m- oder p-Methylbenzyl, 1- oder 2-Phenylethyl, 1-, 2- oder 3-Phenylpropyl oder 1-, 2-, 3- oder 4-Phenylbutyl, für gegebenenfalls substituiertes C₁- bis C₄-Alkylnaphthyl wie Naphthylmethyl, für gegebenenfalls substituiertes C₁- bis C₄-Alkylanthracenyl wie Anthracenylmethyl oder für gegebenenfalls substituiertes C₁- bis C₄-Alkylphenanthrenyl wie Phenanthrenylmethyl. Derartige Arylalkylreste können 1 bis 5 nicht-protische Substituenten oder nicht-protische funktionelle Gruppen, insbesondere am Aryl-Teil, tragen, beispielsweise C₁- bis C₈-Alkyl, C₁- bis C₈-Halogenalkyl wie C₁- bis C₈-Chloralkyl oder C₁- bis C₈-Fluoralkyl, Halogen wie Chlor oder Fluor, Nitro oder Phenyl.

Als Aluminiumtrihalogenid eignet sich insbesondere Aluminiumtrifluorid, Aluminiumtrichlorid oder Aluminiumtribromid. Als Aluminiumalkylhalogenid kommt insbesondere ein Mono(C₁- bis C₄-alkyl)aluminiumdihalogenid oder ein Di(C₁- bis C₄-alkyl)aluminiummonohalogenid in Betracht, zum Beispiel Methylaluminiumdichlorid, Ethylaluminiumdichlorid, Dimethylaluminiumchlorid oder Diethylaluminiumchlorid. In einer bevorzugten Ausführungsform polymerisiert man Isobuten oder ein Isobuten enthaltendes Monomerengemisch in Gegenwart eines als Polymerisationskatalysator wirksamen Aluminiumtrichlorid-Donor-Komplexes.

Weist der als Polymerisationskatalysator wirksame Aluminiumtrihalogenid-Donor-Komplex oder Aluminumalkylhalogenid-Donor-Komplex als Donor eine organische Verbindung mit mindestens einer Ether-Funktion auf, sind unter Verbindungen mit mindestens einer Ether-Funktion auch Acetale und Halbacetale zu verstehen.

In der vorliegenden Erfindung setzt man einen Aluminiumtrihalogenid-Donor-Komplex oder einen Aluminiumalkylhalogenid-Komplex, insbesondere einen Aluminiumtrichlorid-Donor-Komplex, ein, welcher als Donor einen Dihydrocarbylether der allgemeinen Formel R¹-O-R² enthält, in der die Variablen R¹ und R² unabhängig voneinander C₁- bis C₂₀-Alkylreste, insbesondere, C₁- bis C₈-Alkylreste, C₅- bis C₈-Cycloalkylreste, C₆- bis C₂₀-Arylreste, insbesondere C₆- bis C₁₂-Arylreste, oder C₇- bis C₂₀-Arylalkylreste, insbesondere C₇- bis C₁₂-Arylalkylreste, bezeichnen.

Die genannten Dihydrocarbylether können offenkettig oder cyclisch sein, wobei sich bei den cyclischen die beiden Variablen R¹ und R² zu einem Ring schließen, wobei solche Ringe auch zwei oder drei Ethersauerstoffatom enthalten können. Beispiele für derartige offenkettige und cyclische Dihydrocarbylether sind Dimethylether, Diethylether, Din-propylether, Diisopropylether, Di-n-butylether, Di-sec.-butylether, Düsobutyl-ether, Din-pentylether, Di-n-hexylether, Di-n-heptylether, Di-n-octylether, Di-(2-ethylhexyl)ether, Methyl-n-butylether, Methyl-sec.-butylether, Methyl-isobutylether, Methyl-tert.-butyl-ether, Ethyl-n-butylether, Ethyl-sec.-butylether, Ethyl-isobutylether, n-Propyl-n-butylether, n-Propyl-sec.-butylether, n-Propyl-isobutylether, n-Propyl-tert.-butylether, Iso-propyl-n-butylether, Isopropyl-sec.-butylether, Isopropyl-isobutylether, Isopropyl-tert.-butylether, Methyl-n-hexylether, Methyl-n-octylether, Methyl-(2-ethylhexyl)ether, Ethyl-n-hexylether, Ethyl-n-octylether, Ethyl-(2-ethylhexyl)ether, n-Butyl-n-octylether, n-Butyl-(2-ethylhexyl)ether, Tetrahydrofuran, Tetrahydropyran, 1,2-, 1,3- und 1,4-Dioxan, Dicylcohexylether, Diphenylether, Ditolylether, Dixylylether und Dibenzylether. Von den genannten Dihydrocarbylethern haben sich Di-n-butylether und Diphenylether als Donoren für die Aluminiumtrihalogenid-Donor-Komplexe bzw. die Aluminiumalkylhalogenid-Komplexe, insbesondere die Aluminiumtrichlorid-Donor-Komplexe, als besonders vorteilhaft herausgestellt.

In einer weiteren Ausführungsform der vorliegenden Erfindung setzt man alternativ einen Aluminiumtrihalogenid-Donor-Komplex oder einen Aluminiumalkylhalogenid-Komplex, insbesondere einen Aluminiumtrichlorid-Donor-Komplex, ein, welcher als Donor einen Carbonsäurehydrocarbylester der allgemeinen Formel R³-COOR⁴ enthält, in der die Variablen R³ und R⁴ unabhängig voneinander C₁- bis C₂₀-Alkylreste, insbesondere, C₁- bis C₈-Alkylreste, C₅- bis C₈-Cycloalkylreste, C₆- bis C₂₀-Arylreste, insbesondere C₆- bis C₁₂-Arylreste, oder C₇- bis C₂₀-Arylalkylreste, insbesondere C₇-bis C₁₂-Arylalkylreste, bezeichnen.

Beispiele für die genannten Carbonsäurehydrocarbylester sind Ameisensäure-methylester, Ameisensäure-ethylester, Ameisensäure-n-propylester, Ameisensäure-isopropylester, Ameisensäure-n-butylester, Ameisensäure-sec.-butylester, Ameisensäure-isobutylester, Ameisensäure-tert.-butylester, Essigsäure-methylester, Essigsäure-ethylester, Essigsäure-n-propylester, Essigsäure-isopropylester, Essigsäure-n-butylester, Essigsäure-sec.-butylester, Essigsäure-isobutylester, Essigsäure-tert.-butylester, Propionsäure-methylester, Propionsäure-ethylester, Propionsäure-n-propylester, Propionsäure-isopropylester, Propionsäure-n-butylester, Propionsäure-sec.-butylester, Pröpionsäure-isobutylester, Propionsäure-tert.-butylester, Buttersäure-methylester, Buttersäure-ethylester, Buttersäure-n-propylester, Buttersäure-isopropylester, Buttersäure-n-butylester, Buttersäure-sec.-butylester, Buttersäure-isobutylester, Buttersäure-tert.-butylester, Cyclohexancarbonsäure-methylester, Cyclohexancarbonsäure-ethylester, Cyclohexancarbonsäure-n-propylester, Cyclohexancarbonsäure-isopropylester, Cyclohexancarbonsäure-n-butylester, Cyclohexancarbonsäure-sec.-butylester, Cyclohexancarbonsäure-isobutylester, Cyclohexancarbonsäure-tert.-butylester, Benzoesäuremethylester, Benzoesäure-ethylester, Benzoesäure-n-propylester, Benzoesäure-isopropylester, Benzoesäure-n-butylester, Benzoesäure-sec.-butylester, Benzoesäureisobutylester, Benzoesäure-tert.-butylester, Phenylessigsäure-methylester, Phenylessigsäure-ethylester, Phenylessigsäure-n-propylester, Phenylessigsäure-isopropylester, Phenylessigsäure-n-butylester, Phenylessigsäure-sec.-butylester, Phenylessigsäureisobutylester und Phenylessigsäure-tert.-butylester. Von den genannten Carbonsäurehydrocarbylestern hat sich Essigsäureethylester als Donor für die Aluminiumtrihalogenid-Donor-Komplexe bzw. die Aluminiumalkylhalogenid-Komplexe, insbesondere die Aluminiumtrichlorid-Donor-Komplexe, als besonders vorteilhaft herausgestellt.

Weiterhin haben sich diejenigen Dihydrocarbylether und Carbonsäurehydrocarbylester als Donoren für die Aluminiumtrihalogenid-Donor-Komplexe bzw. die Aluminiumalkylhalogenid-Komplexe, insbesondere die Aluminiumtrichlorid-Donor-Komplexe, als besonders vorteilhaft herausgestellt, bei denen die Donor-Verbindung eine GesamtKohlenstoffzahl von 3 bis 16, vorzugsweise von 4 bis 16, insbesondere von 4 bis 12, vor allem von 4 bis 8, aufweist. Bei den Dihydrocarbylethern speziell werden vor allem solche mit insgesamt 6 bis 14, insbesondere 8 bis 12 Kohlenstoffatomen bevorzugt. Bei den Carbonsäurehydrocarbylestern speziell werden vor allem solche mit insgesamt 3 bis 10, insbesondere 4 bis 6 Kohlenstoffatomen bevorzugt.

Das Molverhältnis der genannten Donor-Verbindungen zum Aluminiumtrihalogenid bzw. zum Aluminiumalkylhalogenid, insbesondere zum Aluminiumtrichlorid, im Donor-Komplex bewegt sich in der Regel im Bereich von 0,3 : 1 bis 1,5 : 1, insbesondere von 0,5 : 1 bis 1,2 : 1, vor allem 0,7 : 1 bis 1,1 : 1; es beträgt in den meisten Fällen 1:1. Es kann jedoch auch mit einem stärkerem Überschluß der Donor-Verbindungen, oftmals bis zum einem 10-fachen, insbesondere 3-fachen molaren Überschuß, gearbeitet werden; die überschüssige Menge an Donor-Verbindungen wirkt dann zusätzlich als Lösungs- oder Verdünnungsmittel.

Üblicherweise wird der Aluminiumtrihalogenid-Donor-Komplex bzw. der Aluminiumalkylhalogenid-Komplex, insbesondere der Aluminiumtrichlorid-Donor-Komplex, vor der Polymerisation separat aus dem Aluminiumtrihalogenid bzw. dem Aluminiumalkylhalogenid, insbesondere aus wasserfreiem Aluminiumtrichlorid, und der Donor-Verbindung hergestellt und dann - meist gelöst in einem inerten Lösungsmittel wie einem halogenierten Kohlenwasserstoff, beispielsweise Dichlormethan - dem Polymerisationsmedium zugesetzt. Der Komplex kann aber auch *in situ* vor her Polymerisation hergestellt werden.

In der vorliegenden Erfindung führt man die Polymerisation unter Mitverwendung eines mono- oder polyfunktionellen, insbesondere mono-, di- oder trifunktionellen Initiators durchführt, welcher nach Anspruch 1 ausgewählt ist unter organischen Hydroxyverbindungen, organischen Halogenverbindungen und Wasser. Es können auch Mischungen der genannten Initiatoren eingesetzt werden, beispielsweise Mischungen aus zwei oder mehreren organischen Hydroxyverbindungen, Mischungen aus zwei oder mehreren organischen Halogenverbindungen, Mischungen aus einer oder mehreren organischen Hydroxyverbindungen und einer oder mehreren organischen Halogenverbindungen, Mischungen aus einer oder mehreren organischen Hydroxyverbindungen und Wasser oder Mischungen aus einer oder mehreren organischen Halogenverbindungen und Wasser. Der Initiator kann mono-, di- oder polyfunktionell sein, d.h. im Initiatormolekül können jeweils eine, zwei oder mehrere Hydroxylgruppen bzw. Halogenatome vorliegen, an denen die Polymerisationsreaktion startet. Im Falle von di- oder polyfunktionellen Initiatoren erhält man üblicherweise telechele Isobutenpolymere mit zwei oder mehreren, insbesondere zwei oder drei Polyisobuten-Kettenenden.

Als monofunktionelle Initiatoren geeignete organische Hydroxyverbindungen mit nur einer Hydroxylgruppe im Molekül sind insbesondere Alkohole und Phenole zu nennen, vor allem solche der allgemeinen Formel R⁵-OH, in der R⁵ C₁- bis C₂₀-Alkylreste, insbesondere, C₁- bis C₈-Alkylreste, C₅- bis C₈-Cycloalkylreste, C₆- bis C₂₀-Arylreste, insbesondere C₆- bis C₁₂-Arylreste, oder C₇- bis C₂₀-Arylalkylreste, insbesondere C₇- bis C₁₂-Arylalkylreste, bezeichnet. Weiterhin können die Reste R⁵ auch Mischungen aus den oben genannten Strukturen enthalten und/oder weitere funktionelle Gruppen als die bereits genannten, beispielsweise eine Ketofunktion, ein Nitroxid oder eine Carboxylgruppe, und/oder heterocyclische Strukturelemente aufweisen.

Typische Beispiele für derartige organische Monohydroxyverbindungen sind Methanol, Ethanol, n-Propanol, Isopropanol, n-Butanol, sec.-Butanol, Isobutanol, tert.-Butanol, n-Pentanol, n-Hexanol, n-Heptanol, n-Octanol, 2-Ethylhexanol, Cyclohexanol, Phenol, p-Methoxyphenol, o-, m- und p-Kresol, Benzylalkohol, p-Methoxybenzylalkohol, 1- und 2-Phenylethanol, 1- und 2-(p-Methoxyphenyl)ethanol, 1-, 2- und 3-Phenyl-1-propanol, 1-, 2- und 3-(p-Methoxyphenyl)-1-propanol, 1- und 2-Phenyl-2-propanol, 1- und 2-(p-Methoxyphenyl)-2-propanol, 1-, 2-, 3- und 4-Phenyl-1-butanol, 1-, 2-, 3- und 4-(p-Methoxyphenyl)-1-butanol, 1-, 2-, 3- und 4-Phenyl-2-butanol, 1-, 2-, 3- und 4-(p-Methoxyphenyl)-2-butanol, 9-Methyl-9H-fluoren-9-ol, 1,1-Diphenylethanol, 1,1-Diphenyl-2-propyn-1-ol, 1,1-Diphenylpropanol, 4-(1-Hydroxy-1-phenylethyl)benzonitril, Cyclopropyldiphenylmethanol, 1-Hydroxy-1,1-diphenylpropan-2-on, Benzilsäure, 9-Phenyl-9-fluorenol, Triphenylmethanol, Diphenyl(4-pyridinyl)methanol, alpha,alpha-Diphenyl-2-pyridinmethanol, 4-Methoxytritylalkohol (insbesondere polymergebunden als Festphase), alpha-tert.-Butyl-4-chlor-4'-methylbenzhydrol, Cylcohexyldiphenylmethanol, alpha-(p-Tolyl)-benzhydrol, 1,1,2-Triphenylethanol, alpha,alpha-Diphenyl-2-pyridinethanol, alpha,alpha-4-Pyridylbenzohydrol-N-oxid, 2-Fluortriphenylmethanol, Triphenylpropargylalkohol, 4-[(Diphenyl)hydroxymethyl]benzonitril, 1-(2,6-Dimethoxyphenyl)-2-methyl-1-phenyl-1-propanol, 1,1,2-Triphenylpropan-1-ol und p-Anisaldehydcarbinol.

Als bifunktionelle Initiatoren geeignete organische Hydroxyverbindungen mit zwei Hydroxylgruppen im Molekül sind insbesondere zweiwertige Alkohole oder Diole mit einer Gesamtkohlenstoffzahl von 2 bis 30, insbesondere von 3 bis 24, vor allem von 4 bis 20, und Bisphenole mit einer Gesamtkohlenstoffzahl von 6 bis 30, insbesondere von 8 bis 24, vor allem von 10 bis 20, zu nennen, zum Beispiel Ethylenglykol, 1,2- und 1,3-Propylenglykol, 1,4-Butylenglykol, 1,6-Hexylenglykol, 1,2-, 1,3- oder 1,4-Bis(1-hydroxy-1-methylethyl)benzol (o-, m- oder p-Dicumylalkohol), Bisphenol A, 9,10-Dihydro-9,10-dimethyl-9,10-anthracendiol, 1,1-Diphenylbutan-1,4-diol, 2-Hydroxytriphenylcarbinol und 9-[2-(Hydroxymethyl)phenyl]-9-fluorenol.

Als monofunktionelle Initiatoren geeignete organische Halogenverbindungen mit einem Halogenatom im Molekül sind vor allem Verbindungen der allgemeinen Formel R⁶-Hal zu nennen, in der Hal ein Halogenatom, ausgewählt aus Fluor, Jod und insbesondere Chlor und Brom, bedeutet und R⁶ C₁- bis C₂₀-Alkylreste, insbesondere, C₁- bis C₈-Alkylreste, C₅- bis C₈-Cycloalkylreste oder C₇- bis C₂₀-Arylalkylreste, insbesondere C₇- bis C₁₂-Arylalkylreste, bezeichnet. Weiterhin können die Reste R⁶ auch Mischungen aus den oben genannten Strukturen enthalten und/oder weitere funktionelle Gruppen als die bereits genannten, beispielsweise eine Ketofunktion, ein Nitroxid oder eine Carboxylgruppe, und/oder heterocyclische Strukturelemente aufweisen.

Typische Beispiele für derartige organische Monohalogenverbindungen sind 2-Chlorpropan, 2-Brompropan, sec.-Butylchlorid, sec.-Butyl-bromid, Isobutylchlorid, Isobutylbromid, tert.-Butylchlorid, tert.-Butylbromid, Cyclohexylchlorid, Cyclohexylbromid, 1-Phenyl-1-chlorethan, 1-Phenyl-1-bromethan, 1-Phenyl-1-chlorpropan, 1-Phenyl-1-brompropan, 1-Phenyl-2-chlorpropan, 1-Phenyl-2-brompropan, 2-Phenyl-2-chlorpropan, 2-Phenyl-2-brompropan, 1-Phenyl-1-chlorbutan, 1-Phenyl-1-brombutan, 1-Phenyl-2-chlorbutan, 1-Phenyl-2-brombutan, 1-Phenyl-3-chlorbutan, 1-Phenyl-3-brombutan, 2-Phenyl-2-chlorbutan, 2-Phenyl-2-brombutan, 2-Phenyl-3-chlorbutan, and 2-Phenyl-3-brombutan.

Als difunktionelle Initiatoren geeignete organische Halogenverbindungen mit zwei Halogenatomen im Molekül sind beispielsweise 1,3-Bis-(1-brom-1-methylethyl)benzol, 1,3-Bis-(2-chlor-2-propyl)benzol (1,3-Dicumylchlorid) und 1,4-Bis-(2-chlor-2-propyl)-benzol (1,4-Dicumylchlorid) zu nennen.

Der Initiator ist ausgewählt unter organischen Hydroxyverbindungen, bei denen eine oder mehrere Hydroxylgruppen an jeweils ein sp³-hybridisiertes Kohlenstoffatom gebunden sind, organischen Halogenverbindungen, bei denen eine oder mehrere Halogenatome an jeweils ein sekundäres oder tertiäres sp³-hybridisiertes Kohlenstoffatom gebunden sind, und Wasser. Hiervon wird insbesondere ein Initiator bevorzugt, der unter organischen Hydroxyverbindungen, bei denen eine oder mehrere Hydroxylgruppen an jeweils ein sp³-hybridisiertes Kohlenstoffatom gebunden sind, ausgewählt ist.

Besonders bevorzugt werden bei den organischen Halogenverbindungen als Initiatoren weiterhin solche, bei denen das eine oder die mehreren Halogenatome jeweils an ein sekundäres oder insbesondere an ein tertiäres sp³-hybridisiertes Kohlenstoffatom gebunden sind.

Bevorzugt werden vor allem Initiatoren, die an solch einem sp³-hydrisiertem Kohlenstoffatom neben der Hydroxylgruppe die Reste R⁵, R⁶ und R⁷ tragen, welche unabhängig voneinander Wasserstoff, C₁- bis C₂₀-Alkyl, C₅- bis C₈-Cycloalkyl, C₆- bis C₂₀-Aryl, C₇- bis C₂₀-Alkylaryl oder Phenyl, wobei ein aromatischer Kern noch ein oder mehrere, vorzugsweise ein oder zwei C₁- bis C₄-Alkyl-, C₁- bis C₄-Alkoxy-, C₁- bis C₄-Hydroxyalkyl- oder C₁- bis C₄-Halogenalkylreste als Substituenten tragen kann, bezeichnen, wobei höchstens eine der Variablen R⁵, R⁶ oder R⁷ Wasserstoff bedeutet und mindestens eine der Variablen R⁵, R⁶ oder R⁷ Phenyl, welches noch ein oder mehrere, vorzugsweise ein oder zwei C₁- bis C₄-Alkyl-, C₁- bis C₄-Alkoxy-, C₁- bis C₄-Hydroxyalkyl-oder C₁- bis C₄-Halogenalkylreste als Substituenten tragen kann, bezeichnet.

Ganz besonders bevorzugt werden für die vorliegende Erfindung Initiatoren, welche unter Wasser, Methanol, Ethanol, 1-Phenylethanol, 1-(p-Methoxyphenyl)ethanol, n-Propanol, Isopropanol, 2-Phenyl-2-propanol (Cumol), n-Butanol, Isobutanol, sec.-Butanol, tert.-Butanol, 1-Phenyl-1-chlorethan, 2-Phenyl-2-chlor-propan (Cumylchlorid), tert.-Butylchlorid und 1,3- oder 1,4-Bis(1-hydroxy-1-methyl-ethyl)-benzol ausgewählt sind. Hiervon werden insbesondere Initiatoren bevorzugt, welche unter Wasser, Methanol, Ethanol, 1-Phenylethanol, 1-(p-Methoxyphenyl)-ethanol, n-Propanol, Isopropanol, 2-Phenyl-2-propanol (Cumol), n-Butanol, Isobutanol, sec.-Butanol, tert.-Butanol, 1-Phenyl-1-chlorethan und 1,3- oder 1,4-Bis(1-hydroxy-1-methylethyl)-benzol ausgewählt sind.

Das Molverhältnis der genannten Initiatoren zum eingesetzten Isobuten-Monomer bei Homopolymerisation von Isobuten bzw. zur Gesamtmenge der eingesetzten polymerisationsfähigen Monomere bei Copolymerisation von Isobuten beträgt, bezogen auf jede einzelne funktionelle Stelle des Initiators, in der Regel 0,0005 : 1 bis 0,1 : 1, insbesondere 0,001 : 1 bis 0,075 : 1, vor allem 0,0025 : 1 bis 0,05 : 1. Bei Verwendung von Wasser als alleinigem Initiator oder in Kombination mit organischen Hydroxyverbindungen und/oder organischen Halogenverbindungen als weiteren Initiatoren beträgt das Molverhältnis von Wasser zum eingesetzten Isobuten-Monomer bei Homopolymerisation von Isobuten bzw. zur Gesamtmenge der eingesetzten polymerisationsfähigen Monomere bei Copolymerisation von Isobuten insbesondere 0,0001 : 1 bis 0,1 : 1, vor allem 0,0002 : 1 bis 0,05 : 1.

Ein Teil der als organische Hydroxy- bzw. Halogenverbindungen zugegebenen Initiator-Moleküle wird in die Polymerketten eingebaut. Der Anteil (I_{eff}) an Polymerketten, die durch ein solches eingebautes organisches Initiator-Molekül gestartet werden, kann bis zu 100 % betragen, in der Regel liegt er bei 5 bis 90 %. Die übrigen Polymerketten entstehen entweder durch aus Feuchtigkeitsspuren stammendem Wasser als Initiator-Molekül oder durch Kettenübertragungsreaktionen..

In einer weiteren bevorzugten Ausführungsform der vorliegenden Erfindung führt man die Polymerisation in Gegenwart von 0,01 bis 10 mmol, insbesondere von 0,05 bis 5,0 mmol, vor allem von 0,1 bis 1,0 mmol, jeweils bezogen auf 1 Mol eingesetztes Isobuten-Monomer bei Homopolymerisation von Isobuten bzw. auf 1 Mol der Gesamtmenge der eingesetzten polymerisationsfähigen Monomere bei Copolymerisation von Isobuten, einer stickstoffhaltigen basischen Verbindung durch.

Als derartige stickstoffhaltige basische Verbindung kann ein aliphatisches, cycloaliphatisches oder aromatisches Amin der allgemeinen Formel R⁷-NR⁸R⁹ oder auch Ammoniak eingesetzt werden, in der die Variablen R⁷, R⁸ und R⁹ jeweils unabhängig voneinander für Wasserstoff, C₁- bis C₂₀-Alkylreste, insbesondere, C₁- bis C₈-Alkylreste, C₅-bis C₈-Cycloalkylreste, C₆- bis C₂₀-Arylreste, insbesondere C₆- bis C₁₂-Arylreste, oder C₇- bis C₂₀-Arylalkylreste, insbesondere C₇- bis C₁₂-Arylalkylreste, stehen. Steht keine dieser Variablen für Wasserstoff, liegt ein tertiäres Amin vor. Steht eine dieser Variablen für Wasserstoff, liegt ein sekundäres Amin vor. Stehen zwei dieser Variablen für Wasserstoff, liegt ein primäres Amin vor. Stehen alle dieser Variablen für Wasserstoff, liegt Ammoniak vor.

Typische Beispiele für solche Amine der allgemeinen Formel R⁷-NR⁸R⁹ sind Methylamin, Ethylamin, n-Propylamin, iso-Propylamin, n-Butylamin, tert.-Butylamin, sec.-Butylamin, iso-Butylamin, tert.-Amylamin, n-Hexylamin, n-Heptylamin, n-Octylamin, 2-Ethylhexylamin, Cyclopentylamin, Cyclohexylamin, Anilin, Dimethylamin, Diethylamin, Di-n-propylamin, Di-iso-propylamin, Di-n-butylamin, Di-tert.-butylamin, Di-sec.-butylamin, Di-iso-butylamin, Di-tert.-amylamin, Di-n-hexylamin, Di-n-heptylamin, Di-n-octyl-amin, Di-(2-ethylhexyl)amin, Dicyclopentylamin, Dicyclohexylamin, Diphenylamin, Trimethylamin, Triethylamin, Tri-n-propylamin, Tri-iso-propylamin, Tri-n-butylamin, Tri-tert.-butylamin, Tri-sec.-butyl-amin, Tri-iso-butylamin, Tri-tert.-amylamin, Tri-n-hexylamin, Tri-n-heptylamin, Tri-n-octyl-amin, Tri-(2-ethylhexyl)amin, Tricyclopentylamin, Tricyclohexylamin, Triphenylamin, Dimethylethylamin, Methyl-n-butylamin, N-Methyl-N-phenylamin, N,N-Dimethyl-N-phenylamin, N-Methyl-N,N-diphenylamin oder N-Methyl-N-ethyl-N-n-butylamin.

Weiterhin kann als derartige stickstoffhaltige basische Verbindung auch eine Verbindung mit mehreren, insbesondere mit zwei oder drei Stickstoffatomen und mit 2 bis 20 Kohlenstoffatomen eingesetzt werden, wobei diese Stickstoffatome jeweils unabhängig voneinander Wasserstoffatome oder aliphatische, cycloaliphatische oder aromatische Substituenten tragen. Beispiele für solche Polyamine sind 1,2-Ethylendiamin, 1,3-Propylendiamin, 1,4-Butylendiamin, Diethylentriamin, N-Methyl-1,2-ethylendiamin, N,N-Dimethyl-1,2-ethylendiamin, N,N'-Dimethyl-1,2-ethylendiamin oder N,N-Dimethyl-1,3-propylendiamin.

Als derartige stickstoffhaltige basische Verbindung eignet sich hierbei jedoch insbesondere ein gesättigter, teilungesättigter oder ungesättigter stickstoffhaltiger Fünfring-oder Sechsring-Heterocyclus, der ein, zwei oder drei Ringstickstoffatome enthält und ein oder zwei weitere Ringheteroatome aus der Gruppe Sauerstoff und Schwefel und/oder Hydrocarbylreste, insbesondere C₁- bis C₄-Alkylreste und/oder Phenyl, und/oder funktionelle Gruppen oder Heteroatome als Substituenten, insbesondere Fluor, Chlor, Brom, Nitro und/oder Cyano, aufweisen kann, beispielweise Pyrrolidin, Pyrrol, Imidazol, 1,2,3- oder 1,2,4-Triazol, Oxazol, Thiazol, Piperidin, Pyrazan, Pyrazol, Pyridazin, Pyrimidin, Pyrazin, 1,2,3-, 1,2,4- oder 1,2,5-Triazin, 1,2,5-Oxathiazin, 2H-1,3,5-Thiadiazin oder Morpholin.

In ganz besonderem Maße eignet sich als derartige stickstoffhaltige basische Verbindung jedoch Pyridin oder ein Derivat des Pyridins (insbesondere ein mono-, di- oder tri-C₁- bis C₄-alkylsubstituertes Pyridin) wie 2-, 3-, oder 4-Methylpyridin (Picoline), 2,3-, 2,4-, 2,5-, 2,6-, 3,4-, 3,5- oder 3,6-Dimethylpyridin (Lutidine), 2,4,6-Trimethylpyridin (Collidin), 2-, 3,- oder 4-tert.-Butylpyridin, 2-tert.-Butyl-6-methylpyridin, 2,4-, 2,5-, 2,6-oder 3,5-Di-tert.-butylpyridin oder auch 2-, 3,- oder 4-Phenylpyridin.

Man kann ein einzelne stickstoffhaltige basische Verbindung oder Mischungen solcher stickstoffhaltiger basischer Verbindungen einsetzen.

Für den Einsatz von Isobuten oder eines Isobuten enthaltenden Monomerengemisches als zu polymerisierendem Monomer eignet sich als Isobuten-Quelle sowohl Rein-Isobuten als auch Isobuten-haltige C₄-Kohlenwasserstoffströme, beispielsweise C₄-Raffinate, insbesondere "Raffinat 1", C₄-Schnitte aus der Isobutan-Dehydrierung, C₄-Schnitte aus Steamcrackern und aus FCC-Crackern (fluid catalysed cracking), sofern sie weitgehend von darin enthaltenem 1,3-Butadien befreit sind. Ein C₄-Kohlenwasserstoffstrom aus einer FCC-Raffinerieeinheit ist auch als "b/b"-Strom bekannt. Weitere geeignete Isobuten-haltige C₄-Kohlenwasserstoffströme sind beispielsweise der Produktstrom einer Propylen-Isobutan-Cooxidation oder der Produktstrom aus einer Metathese-Einheit, welche in der Regel nach üblicher Aufreinigung und/oder Aufkonzentrierung eingesetzt werden. Geeignete C₄-Kohlenwasserstoffströme enthalten in der Regel weniger als 500 ppm, vorzugsweise weniger als 200 ppm, Butadien. Die Anwesenheit von 1-Buten sowie von cis- und trans-2-Buten ist weitgehend unkritisch. Typischerweise liegt die Isobutenkonzentration in den genannten C₄-Kohlenwasserstoffströmen im Bereich von 40 bis 60 Gew.-%. So besteht Raffinat 1 in der Regel im wesentlichen aus 30 bis 50 Gew.-% Isobuten, 10 bis 50 Gew.-% 1-Buten, 10 bis 40 Gew.-% cis- und trans-2-Buten sowie 2 bis 35 Gew.-% Butanen; beim erfindungsgemäßen Polymerisationsverfahren verhalten sich die unverzeigten Butene im Raffinat 1 in der Regel praktisch inert und nur das Isobuten wird polymerisiert.

In einer bevorzugten Ausführungsform setzt man als Monomerquelle für die Polymerisation einen technischen C₄-Kohlenwasserstoffstrom mit einem Isobuten-Gehalt von 1 bis 100 Gew.-%, insbesondere von 1 bis 99 Gew.-%, vor allem von 1 bis 90 Gew.-%, besonders bevorzugt von 30 bis 60 Gew.-%, insbesondere einen Raffinat 1-Strom, einen b/b-Strom aus einer FCC-Raffinerieeinheit, einen Produktstrom einer Propylen-Isobutan-Cooxidation oder einen Produktstrom aus einer Metathese-Einheit ein.

Insbesondere bei Verwendung eines Raffinat 1-Stromes als Isobutenquelle hat sich die Verwendung von Wasser als alleinigem oder als weiterem Initiator bewährt, vor allem wenn man bei Temperaturen von -20°C bis +30°C, insbesondere von 0°C bis +20°C, polymerisiert. Bei Temperaturen von -20°C bis +30°C, insbesondere von 0°C bis +20°C, kann man bei Verwendung eines Raffinat 1-Stromes als Isobutenquelle jedoch auch auf den Einsatz eines Initiators verzichten.

Das genannte Isobuten-haltige Monomerengemisch kann geringe Mengen an Kontaminanten wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien wie Aktivkohle, Molekularsiebe oder Ionenaustauscher, aus dem Isobuten-haltigen Monomerengemisch entfernt.

Es können auch Monomermischungen von Isobuten beziehungsweise des Isobuten-haltigen Kohlenwasserstoffgemischs mit olefinisch ungesättigten Monomeren, welche mit Isobuten copolymerisierbar sind, umgesetzt werden. Sofern Monomermischungen des Isobutens mit geeigneten Comonomeren copolymerisiert werden sollen, enthält die Monomermischung vorzugsweise wenigstens 5 Gew.-%, besonders bevorzugt wenigstens 10 Gew.-% und insbesondere wenigstens 20 Gew.-% Isobuten, und vorzugsweise höchstens 95 Gew.-%, besonders bevorzugt höchstens 90 Gew.-% und insbesondere höchstens 80 Gew.-% Comonomere.

Als copolymerisierbare Monomere kommen in Betracht: Vinylaromaten wie Styrol und α-Methylstyrol, C₁- bis C₄-Alkylstyrole wie 2-, 3- und 4-Methylstyrol und 4-tert.-Butylstyrol, Halogenstyrole wie 2-, 3- oder 4-Chlorstyrol sowie Isoolefine mit 5 bis 10 Kohlenstoffatomen wie 2-Methylbuten-1, 2-Methylpenten-1, 2-Methylhexen-1, 2-Ethylpenten-1, 2-Ethylhexen-1 und 2-Propylhepten-1. Als Comonomere kommen weiterhin Olefine in Betracht, die eine Silylgruppe aufweisen, wie 1-Trimethoxysilylethen, 1-(Trime-thoxysilyl)propen, 1-(Trimethoxysilyl)-2-methylpropen-2, 1-[Tri(methoxyethoxy)silyl]-ethen, 1-[Tri(methoxyethoxy)silyl]propen, und 1-[Tri(meth-oxyethoxy)silyl]-2-methylpropen-2. Weiterhin kommen - abhängig von den Polymerisationsbedingungen - als Comonomere auch Isopren, 1-Buten und cis- und trans-2-Buten in Betracht.

Sollen mit dem erfindungsgemäßen Verfahren Copolymere hergestellt werden, so kann das Verfahren so ausgestaltet werden, dass bevorzugt statistische Polymere oder bevorzugt Blockcoplymere entstehen. Zur Herstellung von Blockcopolymeren kann man beispielsweise die verschiedenen Monomere nacheinander der Polymerisationsreaktion zuführen, wobei die Zugabe des zweiten Comonomers insbesondere erst dann erfolgt, wenn das erste Comonomer zumindest teilweise schon polymerisiert ist. Auf diese Weise sind sowohl Diblock-, Triblock- als auch höhere Blockcopolymere zugänglich, die je nach Reihenfolge der Monomerzugabe einen Block des einen oder anderen Comonomers als terminalen Block aufweisen. Blockcopolymere entstehen in einigen Fällen aber auch dann, wenn alle Comonomere zwar gleichzeitig der Polymerisationsreaktion zugeführt werden, eines davon aber signifikant schneller polymerisiert als das oder die anderen. Dies ist insbesondere dann der Fall, wenn Isobuten und eine vinylaromatische Verbindung, insbesondere Styrol, im erfindungsgemäßen Verfahren copolymerisiert werden. Dabei entstehen vorzugsweise Blockcopolymere mit einem terminalen Polystyrolblock. Dies ist darauf zurückzuführen, dass die vinylaromatische Verbindung, speziell Styrol, signifikant langsamer polymerisiert als Isobuten.

Die Polymerisation kann sowohl kontinuierlich als auch diskontinuierlich erfolgen. Kontinuierliche Verfahren können in Analogie zu bekannten Verfahren des Standes der Technik zur kontinuierlichen Polymerisation von Isobuten in Gegenwart von Bortrifluorid-basierten Katalysatoren in flüssiger Phase durchgeführt werden.

Das erfindungsgemäße Verfahren ist sowohl für eine Durchführung bei niedrigen Temperaturen, z.B. bei -90°C bis 0 °C, als auch bei höheren Temperaturen, d.h. bei wenigstens 0°C, z.B. bei 0°C bis +30 °C oder bei 0°C bis +50°C, geeignet. Die Polymerisation gemäß dem erfindungsgemäßen Verfahren wird vorzugsweise jedoch bei niedrigeren Temperaturen, in der Regel bei -70°C bis -10°C, insbesondere bei -60°C bis - 15°C, durchgeführt.

Erfolgt die Polymerisation gemäß dem erfindungsgemäßen Verfahren bei oder oberhalb der Siedetemperatur des zu polymerisierende Monomers oder Monomerengemisches, so wird sie vorzugsweise in Druckgefäßen, beispielsweise in Autoklaven oder in Druckreaktoren, durchgeführt.

Vorzugsweise wird die Polymerisation gemäß dem erfindungsgemäßen Verfahren in Gegenwart eines inerten Verdünnungsmittels durchgeführt. Das verwendete inerte Verdünnungsmittel sollte geeignet sein, die während der Polymerisationsreaktion in der Regel auftretende Erhöhung der Viskosität der Reaktionslösung soweit zu verringern, dass die Abführung der entstehenden Reaktionswärme gewährleistet werden kann. Als Verdünnungsmittel sind solche Lösungsmittel oder Lösungsmittelgemische geeignet, die gegenüber den eingesetzten Reagenzien inert sind. Geeignete Verdünnungsmittel sind beispielsweise aliphatische Kohlenwasserstoffe wie n-Butan, n-Pentan, n-Hexan, n-Heptan, n-Octan und Isooctan, cycloaliphatische Kohlenwasserstoffe wie Cyclopentan und Cyclohexan, aromatische Kohlenwasserstoffe wie Benzol, Toluol und die Xylole, und halogenierte Kohlenwasserstoffe, insbesondere halogenierte aliphatische Kohlenwasserstoffe wie Methylchlorid, Dichlormethan, Trichlormethan (Chloroform), 1,1-Dichlorethan, 1,2-Dichlorethan, Trichlorethan und 1-Chlorbutan sowie halogenierte aromatische Kohlenwasserstoffe und in den Alkylseitenketten halogenierte Alkylaromaten wie Chlorbenzol, Monofluormethylbenzol, Difluormethylbenzol und Trifluormethylbenzol, sowie Mischungen der vorgenannten Verdünnungsmittel. Als Verdünnungsmittel oder als Bestandteile der genannten Lösungsmittelgemische dienen auch die inerten Anteile von Isobuten-haltigen C₄-Kohlenwasserstoffströmen.

Vorzugsweise führt man die erfindungsgemäße Polymerisation in einem halogenierten Kohlenwasserstoff, insbesondere in einem halogenierten aliphatischen Kohlenwasserstoff, oder in einer Mischung aus halogenierten Kohlenwasserstoffen, insbesondere aus halogenierten aliphatischen Kohlenwasserstoffen, oder in einem Gemisch aus mindestens einem halogenierten Kohlenwasserstoff, insbesondere einen halogenierten aliphatischen Kohlenwasserstoff, und mindestens einem aliphatischen, cycloaliphatischen oder aromatischen Kohlenwasserstoff als inertem Verdünnungsmittel durch, beispielsweise ein Gemisch aus Dichlormethan und n-Hexan, üblicherweise im Vol.-Verhältnis von 10:90 bis 90:10, insbesondere von 50:50 bis 85:15. Vorzugsweise werden die Verdünnungsmittel vor ihrem Einsatz von Verunreinigungen wie Wasser, Carbonsäuren oder Mineralsäuren befreit, beispielsweise durch Adsorption an feste Adsorbentien wie Aktivkohle, Molekularsiebe oder Ionenaustauscher.

In einer weiteren bevorzugten Ausführungsform führt man die erfindungsgemäße Polymerisation in halogenfreien aliphatischen oder insbesondere halogenfreien aromatischen Kohlenwasserstoffen, insbesondere Toluol, durch. Für diese Ausführungsform hat sich Wasser in Kombination mit den genannten organischen Hydroxyverbindungen und/oder den genannten organischen Halogenverbindungen oder insbesondere als alleiniger Initiator als besonders vorteilhaft erwiesen.

Vorzugsweise wird die Polymerisation gemäß dem erfindungsgemäßen Verfahren unter weitgehend aprotischen, insbesondere unter weitgehend wasserfreien Reaktionsbedingungen durchgeführt. Unter weitgehend aprotischen beziehungsweise weitgehend wasserfreien Reaktionsbedingungen versteht man, dass der Wassergehalt (bzw. der Gehalt an protischen Verunreinigungen) im Reaktionsgemisch weniger als 50 ppm und insbesondere weniger als 5 ppm beträgt. In der Regel wird man daher die Einsatzstoffe vor ihrer Verwendung durch physikalische und/oder durch chemische Maßnahmen trocknen. Insbesondere hat es sich bewährt, die als Lösungsmittel eingesetzten aliphatischen oder cycloaliphatischen Kohlenwasserstoffe nach üblicher Vorreinigung und Vortrocknung mit einer metallorganischen Verbindung, beispielsweise einer Organolithium-, Organomagnesium- oder Organoaluminium-Verbindung, in einer Menge zu versetzen, die ausreicht, um die Wasserspuren aus dem Lösungsmittel weitgehend zu entfernen. Das so behandelte Lösungsmittel wird dann vorzugsweise direkt in das Reaktionsgefäß einkondensiert. In ähnlicher Weise kann man auch mit den zu polymerisierenden Monomeren, insbesondere mit Isobuten oder mit den Isobuten-haltigen Mischungen verfahren. Auch die Trocknung mit anderen üblichen Trockenmitteln wie Molekularsieben oder vorgetrockneten Oxiden wie Aluminiumoxid, Siliciumdioxid, Calciumoxid oder Bariumoxid, ist geeignet. Die halogenierten Lösungsmittel, für die eine Trocknung mit Metallen wie Natrium oder Kalium oder mit Metallalkylen nicht in Betracht kommt, werden mit dafür geeigneten Trocknungsmitteln, beispielsweise mit Calciumchlorid, Phosphorpentoxid oder Molekularsieb, von Wasser oder Wasserspuren befreit. In analoger Weise kann man auch diejenigen Einsatzstoffe trocknen, für die eine Behandlung mit Metallalkylen ebenfalls nicht in Betracht kommt, beispielsweise vinylaromatische Verbindungen. Auch wenn Wasser als Initiator verwendet oder mitverwendet wird, sollte vorzugsweise Restfeuchtigkeit aus Lösungsmitteln und Monomeren vor Umsetzung durch Trocknung weitestgehend oder vollständig entfernt werden, um den Initiator Wasser gezielt in einer spezifizierten Mengen einsetzen zu können, wodurch man eine höhere Prozesskontrolle und Reproduzierbarkeit der Ergebnisse erhält.

Die Polymerisation des Isobutens bzw. des Isobuten-haltigen Einsatzmaterials erfolgt in aller Regel spontan beim Inkontaktbringen des Aluminiumtrihalogenid-Donor-Komplexes bzw. des Aluminiumalkylhalogenid-Komplexes, insbesondere des Aluminiumtrichlorid-Donor-Komplexes, mit dem Isobuten bzw. dem Isobuten-haltigen Monomerengemisch bei der gewünschten Reaktionstemperatur. Hierbei kann man so vorgehen, dass man die Monomere gegebenenfalls im Verdünnungsmittel vorlegt, auf Reaktionstemperatur bringt und anschließend den Aluminiumtrihalogenid-Donor-Komplex bzw. den Aluminiumalkylhalogenid-Komplex, insbesondere den Aluminiumtrichlorid-Donor-Komplex, zugibt. Man kann auch so vorgehen, dass man den Aluminiumtrihalogenid-Donor-Komplex bzw. den Aluminiumalkylhalogenid-Komplex, insbesondere den Aluminiumtrichlorid-Donor-Komplex, gegebenenfalls im Verdünnungsmittel, vorlegt und anschließend die Monomere zugibt. Als Polymerisationsbeginn gilt dann derjenige Zeitpunkt, zu dem alle Reaktanden im Reaktionsgefäß enthalten sind.

Zur Herstellung von Isobuten-Copolymeren kann man so vorgehen, dass man die Monomere, gegebenenfalls im Verdünnungsmittel, vorlegt und anschließend den Aluminiumtrihalogenid-Donor-Komplex bzw. den Aluminiumalkylhalogenid-Komplex, insbesondere den Aluminiumtrichlorid-Donor-Komplex, zugibt. Die Einstellung der Reaktionstemperatur kann vor oder nach der Zugabe des Aluminiumtrihalogenid-Donor-Komplexes bzw. des Aluminiumalkylhalogenid-Komplexes, insbesondere des Aluminiumtrichlorid-Donor-Komplexes, erfolgen. Man kann auch so vorgehen, dass man zunächst nur eines der Monomere, gegebenenfalls im Verdünnungsmittel, vorlegt, anschließend den Aluminiumtrihalogenid-Donor-Komplex bzw. den Aluminiumalkylhalogenid-Komplex, insbesondere den Aluminiumtrichlorid-Donor-Komplex, zugibt und erst nach einer gewissen Zeit, beispielsweise wenn wenigstens 60%, wenigstens 80% oder wenigstens 90% des Monomers umgesetzt sind, das oder die weiteren Monomere zugibt. Alternativ kann man den Aluminiumtrihalogenid-Donor-Komplex bzw. der Aluminiumalkylhalogenid-Komplex, insbesondere der Aluminiumtrichlorid-Donor-Komplex, gegebenenfalls im Verdünnungsmittel, vorlegen, anschließend die Monomere gleichzeitig oder nacheinander zugeben und dann die gewünschte Reaktionstemperatur einstellen. Als Polymerisationsbeginn gilt dann derjenige Zeitpunkt, zu dem der Aluminiumtrihalogenid-Donor-Komplex bzw. der Aluminiumalkylhalogenid-Komplex, insbesondere der Aluminiumtrichlorid-Donor-Komplex, und wenigstens eines der Monomere im Reaktionsgefäß enthalten sind.

Neben der hier beschriebenen diskontinuierlichen Vorgehensweise kann man die Polymerisation gemäß dem erfindungsgemäßen Verfahren auch als kontinuierliches Verfahren ausgestalten. Hierbei führt man die Einsatzstoffe, d.h. das oder die zu polymerisierenden Monomere, gegebenenfalls das Verdünnungsmittel sowie gegebenenfalls den Aluminiumtrihalogenid-Donor-Komplex bzw. den Aluminiumalkylhalogenid-Komplex, insbesondere den Aluminiumtrichlorid-Donor-Komplex, der Polymerisationsreaktion kontinuierlich zu und entnimmt kontinuierlich Reaktionsprodukt, so dass sich im Reaktor mehr oder weniger stationäre Polymerisationsbedingungen einstellen. Das oder die zu polymerisierenden Monomere können als solche, verdünnt mit einem Verdünnungs- oder Lösungsmittel oder als monomerhaltiger Kohlenwasserstoffstrom zugeführt werden.

Der als Polymerisationskatalysator wirksame Aluminiumtrihalogenid-Donor-Komplex bzw. der Aluminiumalkylhalogenid-Komplex, insbesondere der Aluminiumtrichlorid-Donor-Komplex, liegt im Polymerisationsmedium in der Regel gelöst, dispergiert oder suspendiert vor. Auch eine Trägerung des Aluminiumtrihalogenid-Donor-Komplexes bzw. des Aluminiumalkylhalogenid-Komplexes, insbesondere der Aluminiumtrichlorid-Donor-Komplexes, auf üblichen Trägermaterialien ist möglich. Geeignete Reaktortypen für das Polymerisationsverfahren der vorliegenden Erfindung sind üblicherweise Rührkesselreaktoren, Schlaufenreaktoren und Rohrreaktoren, aber auch Wirbelbettreaktoren, Wirbelschichtreaktoren, Rührtankreaktoren mit und ohne Lösungsmittel, Flüssigbettreaktoren, kontinuierliche Festbettreaktoren und diskontinuierliche Festbettreaktoren (batch-Fahrweise)

Im erfindungsgemäßen Verfahren wird der als Polymerisationskatalysator wirksame Aluminiumtrihalogenid-Donor-Komplex bzw. der Aluminiumalkylhalogenid-Komplex, insbesondere der Aluminiumtrichlorid-Donor-Komplex, in der Regel in solch einer Menge eingesetzt, dass das Molverhältnis von Aluminium im Aluminiumtrihalogenid-Donor-Komplex bzw. Aluminiumalkylhalogenid-Komplex, insbesondere im Aluminiumtrichlorid-Donor-Komplex, zu Isobuten bei Homopolymerisation von Isobuten bzw. zur Gesamtmenge der eingesetzten polymerisationsfähigen Monomere bei Copolymerisation von Isobuten im Bereich von 1:5 bis 1:5000, vorzugsweise 1:10 bis 1:5000, insbesondere 1:15 bis 1:1000, vor allem 1:20 bis 1:250, liegt.

Zum Reaktionsabbruch wird das Reaktionsgemisch vorzugsweise desaktiviert, beispielsweise durch Zugabe einer protischen Verbindung, insbesondere durch Zugabe von Wasser, Alkoholen, wie Methanol, Ethanol, n-Propanol und Isopropanol oder deren Gemische mit Wasser, oder durch Zugabe einer wässrigen Base, z.B. einer wässrigen Lösung eines Alkali- oder Erdalkalihydroxids wie Natriumhydroxid, Kaliumhydroxid, Magnesiumhydroxid oder Calciumhydroxid, eines Alkali- oder Erdalkalicarbonats wie Natrium-, Kalium-, Magnesium- oder Calciumcarbonat, oder eines Alkali- oder Erdalkalihydrogencarbonats wie Natrium-, Kalium-, Magnesium- oder Calciumhydrogencarbonat.

Das erfindungsgemäße Verfahren dient zur Herstellung von hochreaktiven Isobutenhomo- oder -copolymeren mit einem Gehalt an terminalen Vinyliden-Doppelbindungen (α-Doppelbindungen) pro Polyisobuten-Kettenende von wenigstens 50 Mol-%, vorzugsweise von wenigstens 60 Mol-%, vorzugsweise von wenigstens 70 Mol-%, vorzugsweise von wenigstens 80 Mol-%, vorzugsweise von wenigstens 85 Mol-%, besonders bevorzugt von wenigstens 90 Mol-%, besonders bevorzugt von mehr als 91 Mol-% und insbesondere von wenigstens 95 Mol-%, z.B. von nahezu 100 Mol-%. Insbesondere dient es auch zur Herstellung von hochreaktiven Isobuten-Copolymeren, die aus Isobuten und wenigstens einem vinylaromatische Monomer, insbesondere Styrol, aufgebaut sind, und einem Gehalt an terminalen Vinyliden-Doppelbindungen (α-Doppelbindungen) pro Polyisobuten-Kettenende von wenigstens 50 Mol-%, vorzugsweise von wenigstens 60 Mol-%, vorzugsweise von wenigstens 70 Mol-%, vorzugsweise von wenigstens 80 Mol-%, vorzugsweise von wenigstens 80 Mol-%, vorzugsweise von wenigstens 85 Mol-%, besonders bevorzugt von wenigstens 90 Mol-%, besonders bevorzugt von mehr als 91 Mol-% und insbesondere von wenigstens 95 Mol-%, z.B. von nahezu 100 Mol-%, aufweisen. Zur Herstellung solcher Copolymeren aus Isobuten und wenigstens einem vinylaromatischen Monomer, insbesondere Styrol, wird Isobuten oder ein Isobuten-haltiger Kohlenwasserstoffschnitt mit dem wenigstens einem vinylaromatischen Monomer in einem Gew.-Verhältnis Isobuten zu Vinylaromat von 5 bis 95 zu 95 bis 5, insbesondere von 30 bis 70 zu 70 bis 30, copolymerisiert.

Vorzugsweise weisen die mit dem erfindungsgemäßen Verfahren hergestellten hochreaktiven Isobutenhomo- oder -copolymere und speziell die Isobutenhomopolymere eine Polydispersität (PDI = M_{w}/Mₙ) von 1,05 bis weniger als 3,5, vorzugsweise von 1,05 bis weniger als 3,0, vorzugsweise von 1,05 bis weniger als 2,5, vorzugsweise von 1,05 bis 2,3, besonders bevorzugt von 1,05 bis 2,0 und insbesondere von 1,1 bis 1,85 auf. Typische Werte für PDI liegen bei optimaler Verfahrensführung bei 1,2 bis 1,7. Vorzugsweise besitzen die mit dem erfindungsgemäßen Verfahren hergestellten hochreaktiven Isobutenhomo- oder -copolymere ein zahlenmittleres Molekulargewicht Mₙ (bestimmt durch Gelpermeationschromatographie) von vorzugsweise 500 bis 250.000, besonders bevorzugt von 500 bis 100.000, stärker bevorzugt von 500 bis 25.000 und insbesondere von 500 bis 5000. Isobutenhomopolymere besitzen noch stärker bevorzugt ein zahlenmittleres Molekulargewicht Mₙ von 500 bis 10.000 und insbesondere von 500 bis 5.000, z.B. von etwa 1000 oder von etwa 2300.

Die in den erfindungsgemäß hergestellten Isobutenhomopolymeren als überwiegender Anteil auftretenden Isobutenpolymere mit terminalen Vinyliden-Doppelbindungen, die die Initiatormoleküle eingebaut enthalten, sind teilweise neue Verbindungen. Daher sind auch Gegenstand der vorliegenden Erfindung Isobutenpolymere der allgemeinen Formel I 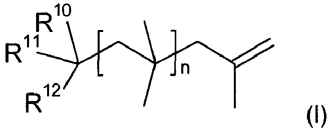 in der
R¹⁰, R¹¹ und R¹² unabhängig voneinander Wasserstoff, C₁- bis C₂₀-Alkyl, C₅- bis C₈-Cycloalkyl, C₆- bis C₂₀-Aryl, C₇- bis C₂₀-Alkylaryl oder Phenyl, wobei ein aromatischer Kern noch ein oder mehrere C₁- bis C₄-Alkyl- oder C₁- bis C₄-Alkoxyreste oder Gruppierungen der allgemeinen Formel II 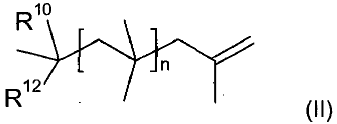
als Substituenten tragen kann, bezeichnen, wobei höchstens eine der Variablen R¹⁰, R¹¹ oder R¹² Wasserstoff bedeutet und mindestens eine der Variablen R¹⁰, R¹¹ oder R¹² Phenyl, welches noch ein oder mehrere C₁- bis C₄-Alkyl- oder C₁- bis C₄-Alkoxyreste-oder Gruppierungen der allgemeinen Formel II als Substituenten tragen kann, bezeichnet, und
n für eine Zahl von 9 bis 4500, vorzugsweise 9 bis 180, insbesondere 9 bis 100, vor allem 12 bis 50 steht.

In einer bevorzugten Ausführungsform bezeichnen R⁵, R⁶ und R⁷ unabhängig voneinander Wasserstoff, C₁- bis C₄-Alkyl, insbesondere Methyl, Ethyl, n-Propyl, Isopropyl, n-Butyl, iso-Butyl, sec.-Butyl oder tert.-Butyl, oder Phenyl, welches noch ein oder zwei C₁- bis C₄-Alkyl- oder C₁- bis C₄-Alkoxyreste oder Gruppierungen der allgemeinen Formel II als Substituenten tragen kann, wobei höchstens eine der Variablen R⁵, R⁶ oder R⁷ Wasserstoff bedeutet und mindestens eine der Variablen R⁵, R⁶ oder R⁷ Phenyl, welches noch ein oder zwei C₁- bis C₄-Alkyl- oder C₁- bis C₄-Alkoxyreste oder Gruppierungen der allgemeinen Formel II als Substituenten tragen kann, bezeichnet, und n für eine Zahl von 9 bis 4500, vorzugsweise 9 bis 180, insbesondere 9 bis 90, vor allem 15 bis 45 steht.

Durch das erfindungsgemäße Verfahren werden Isobuten oder Isobuten enthaltende Monomerengemische unter kationischen Bedingungen mit befriedigenden bis hohen Umsätzen von in der Regel 20 bis 100 %, insbesondere 35 bis 90 %, in kurzen Reaktionszeiten von in der Regel 5 bis 120 Minuten, insbesondere 30 bis 120 Minuten, erfolgreich zu hochreaktiven Isobutenhomo- oder -copolymeren mit einem Gehalt an terminalen Vinyliden-Doppelbindungen pro Polyisobuten-Kettenende von wenigstens 80 Mol-% und mit einer engen Molekulargewichtsverteilung polymerisiert.

Die nachfolgenden Beispiele sollen die vorliegende Erfindung erläutern, ohne sie zu beschränken.

### Beispiel 1: Polymerisation von Isobuten mit AlCl₃•Bu₂O ohne Initiator

1,43 g (25,5 mmol) Rein-Isobuten wurden in einem Gemisch aus 20 ml Dichlormethan und 5 ml n-Hexan bei -20°C mit 0,62 mmol des Komplexes aus Aluminiumtrichlorid und Di-n-butylether im Molverhältnis von 1:1 (in Form einer 1-molaren Lösung in Dichlormethan) innerhalb von 30 Minuten bei einem Umsatz von 71 % zu einem Polyisobuten mit einem zahlenmittleren Molekulargewicht Mₙ von 2095, einer Polydispersität (PDI) von 2,27 und einem Gehalt an terminalen Vinyliden-Doppelbindungen von 91 Mol-% polymerisiert.

### Beispiel 2: Polymerisation von Isobuten mit AlCl₃•EtOAc ohne Initiator

1,43 g (25,5 mmol) Rein-Isobuten wurden in einem Gemisch aus 20 ml Dichlormethan und 5 ml n-Hexan bei -20°C mit 0,62 mmol des Komplexes aus Aluminiumtrichlorid und Essigsäureethylester im Molverhältnis von 1:1 (in Form einer 1-molaren Lösung in Dichlormethan) innerhalb von 30 Minuten bei einem Umsatz von 17 % zu einem Polyisobuten mit einem zahlenmittleren Molekulargewicht Mₙ von 1930, einer Polydispersität (PDI) von 1,45 und einem Gehalt an terminalen Vinyliden-Doppelbindungen von 88 Mol-% polymerisiert.

### Beispiel 3: Polymerisation von Isobuten mit AlCl₃•Bu₂O und mit Cumol als Initiator

1,43 g (25,5 mmol) Rein-Isobuten wurden in einem Gemisch aus 20 ml Dichlormethan und 5 ml n-Hexan bei -40°C mit 0,62 mmol des Komplexes aus Aluminiumtrichlorid und Di-n-butylether im Molverhältnis von 1:1 (in Form einer 1-molaren Lösung in Dichlormethan) in Gegenwart von 0,5 mmol 2-Phenyl-2-propanol (Cumol) als Initiator innerhalb von 30 Minuten bei einem Umsatz von 62 % zu einem Polyisobuten mit einem zahlenmittleren Molekulargewicht Mₙ von 1515, einer Polydispersität (PDI) von 1,45 und einem Gehalt an terminalen Vinyliden-Doppelbindungen von 90 Mol-% polymerisiert. Der Anteil an durch Cumol gestarteten Polymerketten (I_{eff}) betrug 70 %.

### Beispiel 4: Polymerisation von Isobuten mit AlCl₃•Bu₂O und mit Cumol als Initiator

1,43 g (25,5 mmol) Rein-Isobuten wurden in einem Gemisch aus 20 ml Dichlormethan und 5 ml n-Hexan bei -40°C mit 1,24 mmol des Komplexes aus Aluminiumtrichlorid und Di-n-butylether im Molverhältnis von 1:1 (in Form einer 1-molaren Lösung in Dichlormethan) in Gegenwart von 1,0 mmol 2-Phenyl-2-propanol (Cumol) als Initiator innerhalb von 30 Minuten bei einem Umsatz von 76 % zu einem Polyisobuten mit einem zahlenmittleren Molekulargewicht Mₙ von 1180, einer Polydispersität (PDI) von 1,21 und einem Gehalt an terminalen Vinyliden-Doppelbindungen von 88 Mol-% polymerisiert. Der Anteil an durch Cumol gestarteten Polymerketten (I_{eff}) betrug 90 %.

### Beispiel 5: Polymerisation von Isobuten mit AlCl₃•Bu₂O und mit Cumol als Initiator

1,43 g (25,5 mmol) Rein-Isobuten wurden in einem Gemisch aus 20 ml Dichlormethan und 5 ml n-Hexan bei -60°C mit 0,62 mmol des Komplexes aus Aluminiumtrichlorid und Di-n-butylether im Molverhältnis von 1:1 (in Form einer 1-molaren Lösung in Dichlormethan) in Gegenwart von 0,5 mmol 2-Phenyl-2-propanol (Cumol) als Initiator innerhalb von 31 Minuten bei einem Umsatz von 91 % zu einem Polyisobuten mit einem zahlenmittleren Molekulargewicht Mₙ von 2275, einer Polydispersität (PDI) von 1,83 und einem Gehalt an terminalen Vinyliden-Doppelbindungen von 85 Mol-% polymerisiert. Der Anteil an durch Cumol gestarteten Polymerketten (I_{eff}) betrug 90 %.

### Beispiel 6: Polymerisation von Isobuten mit AlCl₃•Bu₂O und mit Cumol als Initiator

1,43 g (25,5 mmol) Rein-Isobuten wurden in einem Gemisch aus 15 ml Dichlormethan und 10 ml n-Hexan bei -60°C mit 0,36 mmol des Komplexes aus Aluminiumtrichlorid und Di-n-butylether im Molverhältnis von 1:1 (in Form einer 1-molaren Lösung in Dichlormethan) in Gegenwart von 0,29 mmol 2-Phenyl-2-propanol (Cumol) als Initiator innerhalb von 120 Minuten bei einem Umsatz von 56 % zu einem Polyisobuten mit einem zahlenmittleren Molekulargewicht Mₙ von 2690, einer Polydispersität (PDI) von 1,91 und einem Gehalt an terminalen Vinyliden-Doppelbindungen von 89 Mol-% polymerisiert. Der Anteil an durch Cumol gestarteten Polymerketten (I_{eff}) betrug 88 %. Beispiel 7a: Polymerisation von Isobuten mit AlCl₃•Bu₂O und mit Cumol als Initiator 1,43 g (25,5 mmol) Rein-Isobuten wurden in einem Gemisch aus 15 ml Dichlormethan und 10 ml n-Hexan bei -60°C mit 0,36 mmol des Komplexes aus Aluminiumtrichlorid und Di-n-butylether im Molverhältnis von 1:1 (in Form einer 1-molaren Lösung in Dichlormethan) in Gegenwart von 0,09 mmol 2-Phenyl-2-propanol (Cumol) als Initiator innerhalb von 30 Minuten bei einem Umsatz von 47 % zu einem Polyisobuten mit einem zahlenmittleren Molekulargewicht Mₙ von 3510, einer Polydispersität (PDI) von 2,17 und einem Gehalt an terminalen Vinyliden-Doppelbindungen von 95 Mol-% polymerisiert. Der Anteil an durch Cumol gestarteten Polymerketten (I_{eff}) betrug 37 %.

### Beispiel 7b: Polymerisation von Isobuten mit AlCl₃•Bu₂O und mit Cumol als Initiator

Beispiel 7a wurde wiederholt, wobei die Reaktionszeit vervierfacht wurde: nach 120 Minuten erhielt man bei einem Umsatz von 62 % ein Polyisobuten mit einem zahlenmittleren Molekulargewicht Mₙ von 3360, einer Polydispersität (PDI) von 1,93 und einem Gehalt an terminalen Vinyliden-Doppelbindungen von 91 Mol-% polymerisiert. Der Anteil an durch Cumol gestarteten Polymerketten (I_{eff}) betrug 23 %.

### Beispiel 8: Polymerisation von Isobuten mit AlCl₃•Bu₂O und mit Cumol als Initiator

2,97 g (53,0 mmol) Rein-Isobuten wurden in 66 ml Dichlormethan bei -15°C mit 2,15 mmol des Komplexes aus Aluminiumtrichlorid und Di-n-butylether im Molverhältnis von 1:1 (in Form einer 1-molaren Lösung in Dichlormethan) in Gegenwart von 1,0 mmol 2-Phenyl-2-propanol (Cumol) als Initiator innerhalb von 60 Minuten bei einem Umsatz von 40% zu einem Polyisobuten mit einem zahlenmittleren Molekulargewicht Mₙ von 1675, einer Polydispersität (PDI) von 1,75 und einem Gehalt an terminalen Vinyliden-Doppelbindungen von 96 Mol-% polymerisiert.

### Beispiel 9: Polymerisation von Isobuten mit AlCl₃•Bu₂O und mit Cumol als Initiator

3,09 g (55,0 mmol) Rein-Isobuten wurden in 66 ml Dichlormethan bei -60°C mit 1,80 mmol des Komplexes aus Aluminiumtrichlorid und Di-n-butylether im Molverhältnis von 1:1 (in Form einer 1-molaren Lösung in Dichlormethan) in Gegenwart von 1,0 mmol 2-Phenyl-2-propanol (Cumol) als Initiator innerhalb von 60 Minuten bei einem Umsatz von 99% zu einem Polyisobuten mit einem zahlenmittleren Molekulargewicht Mₙ von 1700, einer Polydispersität (PDI) von 1,82 und einem Gehalt an terminalen Vinyliden-Doppelbindungen von 96 Mol-% polymerisiert.

### Beispiel 10: Polymerisation von Isobuten mit AlCl₃•0,8 Bu₂O und mit Cumol als Initiator

1,43 g (25,5 mmol) Rein-Isobuten wurden in einem Gemisch aus 20 ml Dichlormethan und 5 ml n-Hexan bei -20°C mit 0,62 mmol des Komplexes aus Aluminiumtrichlorid und Di-n-butylether im Molverhältnis von 1 : 0,8 (in Form einer 1-molaren Lösung in Dichlormethan) in Gegenwart von 0,5 mmol 2-Phenyl-2-propanol (Cumol) als Initiator innerhalb von 30 Minuten bei einem Umsatz von 44 % zu einem Polyisobuten mit einem zahlenmittleren Molekulargewicht Mₙ von 1550, einer Polydispersität (PDI) von 1,74 und einem Gehalt an terminalen Vinyliden-Doppelbindungen von 87 Mol-% polymerisiert. Der Anteil an durch Cumol gestarteten Polymerketten (I_{eff}) betrug 56 %.

### Beispiel 11: Polymerisation von "Raffinat 1" mit AlCl₃•Bu₂O und mit Cumol als Initiator

7,43 g "Raffinat 1", enthaltend 2,97 g (53,0 mmol) Rein-Isobuten, wurden in 66 ml Dichlormethan bei -30°C mit 2,15 mmol des Komplexes aus Aluminiumtrichlorid und Di-n-butylether im Molverhältnis von 1:1 (in Form einer 1-molaren Lösung in Dichlormethan) in Gegenwart von 1,0 mmol 2-Phenyl-2-propanol (Cumol) als Initiator innerhalb von 60 Minuten bei einem Umsatz von 30% zu einem Polyisobuten mit einem zahlenmittleren Molekulargewicht Mₙ von 1720, einer Polydispersität (PDI) von 2,04 und einem Gehalt an terminalen Vinyliden-Doppelbindungen von 93 Mol-% polymerisiert.

### Beispiel 12a: Polymerisation von Isobuten mit AlCl₃•Bu₂O und mit Cumol als Initiator

2,97 g (53,0 mmol) Rein-Isobuten wurden in 66 ml Dichlormethan bei -60°C mit 1,43 mmol des Komplexes aus Aluminiumtrichlorid und Di-n-butylether im Molverhältnis von 1:1 (in Form einer 1-molaren Lösung in Dichlormethan) in Gegenwart von 1,0 mmol 2-Phenyl-2-propanol (Cumol) als Initiator innerhalb von 60 Minuten bei einem Umsatz von 100% zu einem Polyisobuten mit einem zahlenmittleren Molekulargewicht Mₙ von 6005, einer Polydispersität (PDI) von 2,26 und einem Gehalt an terminalen Vinyliden-Doppelbindungen von 94 Mol-% polymerisiert.

### Beispiel 12b: Polymerisation von Isobuten mit BF₃•MeOH (zum Vergleich gegen das erfindungsgemäße Beispiel 12a)

2,97 g (53,0 mmol) Rein-Isobuten wurden in 66 ml Dichlormethan bei -60°C mit 1,34 mmol des Komplexes aus Bortrifluorid und Methanol im Molverhältnis von 1:1 innerhalb von 60 Minuten bei einem Umsatz von 43% zu einem Polyisobuten mit einem zahlenmittleren Molekulargewicht Mₙ von 4850, einer Polydispersität (PDI) von 4,05 und einem Gehalt an terminalen Vinyliden-Doppelbindungen von nur 62,5 Mol-% polymerisiert.

### Beispiel 13: Polymerisation von Isobuten mit AlCl₃•Bu₂O und mit 1-Phenyl-1-chlorethan als Initiator

1,43 g (25,5 mmol) Rein-Isobuten wurden in einem Gemisch aus 20 ml Dichlormethan und 5 ml n-Hexan bei -40°C mit 0,62 mmol des Komplexes aus Aluminiumtrichlorid und Di-n-butylether im Molverhältnis von 1:1 (in Form einer 1-molaren Lösung in Dichlormethan) in Gegenwart von 0,5 mmol 1-Phenyl-1-chlorethan als Initiator innerhalb von 30 Minuten bei einem Umsatz von 77 % zu einem Polyisobuten mit einem zahlenmittleren Molekulargewicht Mₙ von 2170, einer Polydispersität (PDI) von 1,99 und einem Gehalt an terminalen Vinyliden-Doppelbindungen von 88 Mol-% polymerisiert. Der Anteil an durch 1-Phenyl-1-chlorethan gestarteten Polymerketten (I_{eff}) betrug 4 %.

### Beispiel 14: Polymerisation von Isobuten mit AlCl₃•Bu₂O und mit 1-(p-Methoxyphenyl)-ethanol als Initiator

1,43 g (25,5 mmol) Rein-Isobuten wurden in einem Gemisch aus 20 ml Dichlormethan und 5 ml n-Hexan bei -20°C mit 0,62 mmol des Komplexes aus Aluminiumtrichlorid und Di-n-butylether im Molverhältnis von 1:1 (in Form einer 1-molaren Lösung in Dichlormethan) in Gegenwart von 0,5 mmol 1-(p-Methoxyphenyl)ethanoi als Initiator innerhalb von 10 Minuten bei einem Umsatz von 26 % zu einem Polyisobuten mit einem zahlenmittleren Molekulargewicht Mₙ von 960, einer Polydispersität (PDI) von 1,05 und einem Gehalt an terminalen Vinyliden-Doppelbindungen von 88 Mol-% polymerisiert.

### Beispiel 15a: Polymerisation von Isobuten mit AlCl₃•Bu₂O und mit Cumol als Initiator in Gegenwart von Pyridin

1,43 g (25,5 mmol) Rein-Isobuten wurden in einem Gemisch aus 15 ml Dichlormethan und 10 ml n-Hexan bei -60°C mit 0,36 mmol des Komplexes aus Aluminiumtrichlorid und Di-n-butylether im Molverhältnis von 1:1 (in Form einer 1-molaren Lösung in Dichlormethan) in Gegenwart von 0,09 mmol 2-Phenyl-2-propanol (Cumol) als Initiator und 0,0125 mol Pyridin als stickstoffhaltige basische Verbindung innerhalb von 30 Minuten bei einem Umsatz von 44 % zu einem Polyisobuten mit einem zahlenmittleren Molekulargewicht Mₙ von 2580, einer Polydispersität (PDI) von 1,86 und einem Gehalt an terminalen Vinyliden-Doppelbindungen von 90 Mol-% polymerisiert. Der Anteil an durch Cumol gestarteten Polymerketten (I_{eff}) betrug 36 %.

### Beispiel 15b: Polymerisation von Isobuten mit AlCl₃•Bu₂O und mit Cumol als Initiator in Gegenwart von Pyridin

Beispiel 15a wurde wiederholt, wobei die Reaktionszeit vervierfacht wurde: nach 120 Minuten erhielt man bei einem Umsatz von 53 % ein Polyisobuten mit einem zahlenmittleren Molekulargewicht Mₙ von 2490, einer Polydispersität (PDI) von 1,84 und einem Gehalt an terminalen Vinyliden-Doppelbindungen von 91 Mol-% polymerisiert. Der Anteil an durch Cumol gestarteten Polymerketten (I_{eff}) betrug 26 %.

### Beispiel 16: Polymerisation von Isobuten mit AlCl₃•Bu₂O und mit Cumol als Initiator in Gegenwart von Pyridin

1,43 g (25,5 mmol) Rein-Isobuten wurden in einem Gemisch aus 15 ml Dichlormethan und 10 ml n-Hexan bei -20°C mit 0,36 mmol des Komplexes aus Aluminiumtrichlorid und Di-n-butylether im Molverhältnis von 1:1 (in Form einer 1-molaren Lösung in Dichlormethan) in Gegenwart von 0,09 mmol 2-Phenyl-2-propanol (Cumol) als Initiator und 0,0125 mol Pyridin als stickstoffhaltige basische Verbindung innerhalb von 120 Minuten bei einem Umsatz von 21 % zu einem Polyisobuten mit einem zahlenmittleren Molekulargewicht Mₙ von 1445, einer Polydispersität (PDI) von 1,69 und einem Gehalt an terminalen Vinyliden-Doppelbindungen von 94 Mol-% polymerisiert. Der Anteil an durch Cumol gestarteten Polymerketten (I_{eff}) betrug 27 %.

### Beispiel 17: Polymerisation von Isobuten mit AlCl₃•Bu₂O und mit Cumol als Initiator in Gegenwart von Pyridin

1,43 g (25,5 mmol) Rein-Isobuten wurden in einem Gemisch aus 20 ml Dichlormethan und 5 ml n-Hexan bei -40°C mit 0,62 mmol des Komplexes aus Aluminiumtrichlorid und Di-n-butylether im Molverhältnis von 1:1 (in Form einer 1-molaren Lösung in Dichlormethan) in Gegenwart von 0,5 mmol 2-Phenyl-2-propanol (Cumol) als Initiator und 0,0125 mol Pyridin als stickstoffhaltige basische Verbindung innerhalb von 30 Minuten bei einem Umsatz von 51 % zu einem Polyisobuten mit einem zahlenmittleren Molekulargewicht Mₙ von 1270, einer Polydispersität (PDI) von 1,17 und einem Gehalt an terminalen Vinyliden-Doppelbindungen von 91 Mol-% polymerisiert. Der Anteil an durch Cumol gestarteten Polymerketten (I_{eff}) betrug 48 %.

### Beispiel 18: Polymerisation von Isobuten mit AlCl₃•Bu₂O und mit 1-Phenyl-1-chlorethan als Initiator

1,43 g (2,25 mmol) Rein-Isobuten wurden in einem Gemisch aus 20 ml Dichlormethan und 5 ml n-Hexan bei -20°C mit 0,62 mmol des Komplexes aus Aluminiumtrichlorid und Di-n-butylether im Molverhältnis von 1:1 (in Form einer 1-molaren Lösung in Dichlormethan) in Gegenwart von 0,5 mmol 1-Phenyl-1-chlorethan als Initiator innerhalb von 3 Minuten bei einem Umsatz von 37 % zu einem Polyisobuten mit einem zahlenmittleren Molekulargewicht Mₙ von 3270, einer Polydispersität (PDI) von 1,76 und einem Gehalt an terminalen Vinyliden-Doppelbindungen von 97 Mol-% polymerisiert.

### Beispiel 19: Polymerisation von Isobuten mit AlCl₃•Bu₂O und mit 1,4-Bis(1-hydroxy-1-methylethyl)benzol als Initiator

1,43 g (25,5 mmol) Rein-Isobuten wurden in einem Gemisch aus 20 ml Dichlormethan und 5 ml n-Hexan bei -20°C mit 0,62 mmol des Komplexes aus Aluminiumtrichlorid und Di-n-butylether im Molverhältnis von 1:1 (in Form einer 1-molaren Lösung in Dichlormethan) in Gegenwart von 0,25 mmol 1,4-Bis(1-hydroxy-1-methylethyl)benzol als Initiator innerhalb von 3 Minuten bei einem Umsatz von 36 % zu einem Polyisobuten mit einem zahlenmittleren Molekulargewicht Mₙ von 2750, einer Polydispersität (PDI) von 1,99 und einem Gehalt an terminalen Vinyliden-Doppelbindungen von 94 Mol-% polymerisiert.

### Beispiel 20: Polymerisation von Isobuten mit AlCl₃•Bu₂O ohne Initiator

1,43 g (25,5 mmol) Rein-Isobuten wurden in einem Gemisch aus 15 ml Dichlormethan und 10 ml n-Hexan bei -60°C mit 0,36 mmol des Komplexes aus Aluminiumtrichlorid und Di-n-butylether im Molverhältnis von 1:1 (in Form einer 1-molaren Lösung in Dichlormethan) innerhalb von 120 Minuten bei einem Umsatz von 46 % zu einem Polyisobuten mit einem zahlenmittleren Molekulargewicht Mₙ von 7895, einer Polydispersität (PDI) von 2,23 und einem Gehalt an terminalen Vinyliden-Doppelbindungen von 94 Mol-% polymerisiert.

### Beispiel 21: Polymerisation von Isobuten mit AlCl₃•Bu₂O und mit Wasser als Initiator

1,43 g (25,5 mmol) Rein-Isobuten wurden in 25 ml Dichlormethan bei -20°C mit 0,62 mmol des Komplexes aus Aluminiumtrichlorid und Di-n-butylether im Molverhältnis von 1:1 (in Form einer 1-molaren Lösung in Dichlormethan) in Gegenwart von 0,07 mmol Wasser als Initiator innerhalb von 3 Minuten bei einem Umsatz von 65 % zu einem Polyisobuten mit einem zahlenmittleren Molekulargewicht Mₙ von 2500, einer Polydispersität (PDI) von 1,92 und einem Gehalt an terminalen Vinyliden-Doppelbindungen von 92 Mol-% polymerisiert.

### Beispiel 22: Polymerisation von Isobuten mit AlCl₃•Bu₂O und mit Cumol als Initiator

1,43 g (25,5 mmol) Rein-Isobuten wurden in 25 ml Toluol bei -20°C mit 0,62 mmol des Komplexes aus Aluminiumtrichlorid und Di-n-butylether im Molverhältnis von 1:1 (in Form einer 1-molaren Lösung in Dichlormethan) in Gegenwart von 0,5 mmol 2-Phenyl-2-propanol (Cumol) als Initiator innerhalb von 10 Minuten bei einem Umsatz von 19 % zu einem Polyisobuten mit einem zahlenmittleren Molekulargewicht Mₙ von 1030, einer Polydispersität (PDI) von 2,65 und einem Gehalt an terminalen Vinyliden-Doppelbindungen von 89 Mol-% polymerisiert. Der Anteil an durch Cumol gestarteten Polymerketten (I_{eff}) betrug 98 %.

### Beispiel 23: Polymerisation von Isobuten mit AlCl₃•Bu₂O und mit Cumol als Initiator

1,43 g (25,5 mmol) Rein-Isobuten wurden in einer Mischung aus 15 ml Toluol und 10 ml Trifluormethylbenzol bei -20°C mit 0,62 mmol des Komplexes aus Aluminiumtrichlorid und Di-n-butylether im Molverhältnis von 1:1 (in Form einer 1-molaren Lösung in Dichlormethan) in Gegenwart von 0,5 mmol 2-Phenyl-2-propanol (Cumol) als Initiator innerhalb von 3 Minuten bei einem Umsatz von 24 % zu einem Polyisobuten mit einem zahlenmittleren Molekulargewicht Mₙ von 1095, einer Polydispersität (PDI) von 1,93 und einem Gehalt an terminalen Vinyliden-Doppelbindungen von 78 Mol-% polymerisiert. Der Anteil an durch Cumol gestarteten Polymerketten (I_{eff}) betrug 94 %.

### Beispiel 24: Polymerisation von Isobuten mit AlCl₃•Bu₂O und mit Cumol als Initiator

3,00 g (53 mmol) Rein-Isobuten wurden in 50 ml Dichlormethan bei -60°C mit 187,2 mg des Komplexes aus Aluminiumtrichlorid und Di-n-butylether im Molverhältnis von 1:1 (in Form einer 1-molaren Lösung in Dichlormethan) in Gegenwart von 24,5 mg 2-Phenyl-2-propanol (Cumol) als Initiator innerhalb von 120 Minuten bei einem Umsatz von 23 % zu einem Polyisobuten mit einem zahlenmittleren Molekulargewicht Mₙ von 3210, einer Polydispersität (PDI) von 1,90 und einem Gehalt an terminalen Vinyliden-Doppelbindungen von >99 Mol-% polymerisiert.

### Beispiel 25: Polymerisation von Isobuten mit AlCl₃•Bu₂O und mit Cumol als Initiator

3,00 g (53 mmol) Rein-Isobuten wurden in 50 ml Dichlormethan bei -60°C mit 1140 mg des Komplexes aus Aluminiumtrichlorid und Di-n-butylether im Molverhältnis von 1:1 (in Form einer 1-molaren Lösung in Dichlormethan) in Gegenwart von 24,5 mg 2-Phenyl-2-propanol (Cumol) als Initiator innerhalb von 120 Minuten bei einem Umsatz von 100 % zu einem Polyisobuten mit einem zahlenmittleren Molekulargewicht Mₙ von 4220, einer Polydispersität (PDI) von 2,05 und einem Gehalt an terminalen Vinyliden-Doppelbindungen von >99 Mol-% polymerisiert.

### Beispiel 26: Polymerisation von "Raffinat 1" mit AlCl₃•Bu₂O und mit Cumol als Initiator

7,50 g "Raffinat 1", enthaltend 3,00 g (53 mmol) Rein-Isobuten, wurden in 50 ml Dichlormethan bei -60°C mit 566,8 mg des Komplexes aus Aluminiumtrichlorid und Di-n-butylether im Molverhältnis von 1:1 (in Form einer 1-molaren Lösung in Dichlormethan) in Gegenwart von 24,5 mg 2-Phenyl-2-propanol (Cumol) als Initiator innerhalb von 60 Minuten bei einem Umsatz von 80 % zu einem Polyisobuten mit einem zahlenmittleren Molekulargewicht Mₙ von 4770, einer Polydispersität (PDI) von 2,67 und einem Gehalt an terminalen Vinyliden-Doppelbindungen von 96 Mol-% polymerisiert.

### Beispiel 27: Polymerisation von "Raffinat 1" mit AlCl₃•Bu₂O ohne Lösungsmittel und mit Wasser als Initiator

69,25 g "Raffinat 1", enthaltend 27,7 g (494 mmol) Rein-Isobuten, wurden in einem Autoklaven mit 6,54 g des *in situ* im Molverhältnis von 1:1 hergestellten Komplexes aus Aluminiumtrichlorid und Di-n-butylether in Gegenwart von 0,43 g (23,8 mmol) Wasser als Initiator ohne Lösungsmittel bei 0°C innerhalb von 60 Minuten bei einem Umsatz von 76 % zu einem Polyisobuten mit einem zahlenmittleren Molekulargewicht Mₙ von 965, einer Polydispersität (PDI) von 2,86 und einem Gehalt an terminalen Vinyliden-Doppelbindungen von 76 Mol-% polymerisiert.

### Beispiel 28: Polymerisation von "Raffinat 1" mit AlCl₃•Bu₂O ohne Lösungsmittel und mit Wasser als Initiator

72,75 g "Raffinat 1", enthaltend 29,1 g (519 mmol) Rein-Isobuten, wurden in einem Autoklaven mit 6,79 g des *in situ* im Molverhältnis von 1:1 hergestellten Komplexes aus Aluminiumtrichlorid und Di-n-butylether in Gegenwart von 0,46 g (25,4 mmol) Wasser als Initiator ohne Lösungsmittel bei +20°C innerhalb von 60 Minuten bei einem Umsatz von 69 % zu einem Polyisobuten mit einem zahlenmittleren Molekulargewicht Mₙ von 800, einer Polydispersität (PDI) von 2,69 und einem Gehalt an terminalen Vinyliden-Doppelbindungen von 70 Mol-% polymerisiert.

### Beispiel 29: Polymerisation von "Raffinat 1" mit AlCl₃•Bu₂O ohne Lösungsmittel und ohne Initiator

56,75 g "Raffinat 1", enthaltend 22,7 g (405 mmol) Rein-Isobuten, wurden in einem Autoklaven mit 6,57 g des *in situ* im Molverhältnis von 1:1 hergestellten Komplexes aus Aluminiumtrichlorid und Di-n-butylether ohne Lösungsmittel bei +20°C innerhalb von 60 Minuten bei einem Umsatz von 93 % zu einem Polyisobuten mit einem zahlenmittleren Molekulargewicht Mₙ von 1000, einer Polydispersität (PDI) von 2,90 und einem Gehalt an terminalen Vinyliden-Doppelbindungen von 76 Mol-% polymerisiert.

### Beispiel 30: Polymerisation von "Raffinat 1" mit AlCl₃•Bu₂O ohne Lösungsmittel und ohne Initiator

62,25 g "Raffinat 1", enthaltend 24,9 g (444 mmol) Rein-Isobuten, wurden in einem Autoklaven mit 6,56 g des *in situ* im Molverhältnis von 1:1 hergestellten Komplexes aus Aluminiumtrichlorid und Di-n-butylether ohne Lösungsmittel bei 0°C innerhalb von 60 Minuten bei einem Umsatz von 88 % zu einem Polyisobuten mit einem zahlenmittleren Molekulargewicht Mₙ von 1375, einer Polydispersität (PDI) von 2,94 und einem Gehalt an terminalen Vinyliden-Doppelbindungen von 69 Mol-% polymerisiert.

## Patentansprüche

1. Verfahren zur Herstellung von hochreaktiven Isobutenhomo- oder -copolymeren mit einem Gehalt an terminalen Vinyliden-Doppelbindungen pro Polyisobuten-Kettenende von wenigstens 50 Mol-%, **dadurch gekennzeichnet, dass** man Isobuten oder ein Isobuten enthaltendes Monomerengemisch in Gegenwart eines als Polymerisationskatalysator wirksamen Aluminiumtrihalogenid-Donor-Komplexes oder eines Aluminumalkylhalogenid-Donor-Komplexes polymerisiert, welcher als Donor eine organische Verbindung mit mindestens einer Ether-Funktion oder einer Carbonsäureester-Funktion ausgewählt aus Dihydrocarbylethern der allgemeinen Formel R¹-O-R², in der die Variablen R¹ und R² unabhängig voneinander C₁- bis C₂₀-Alkylreste, C₅- bis C₈-Cycloalkylreste, C₆- bis C₂₀-Arylreste oder C₇- bis C₂₀-Arylalkylreste bezeichnen, und Carbonsäurehydrocarbylestern der allgemeinen Formel R³-COOR⁴, in der die Variablen R³ und R⁴ unabhängig voneinander C₁- bis C₂₀-Alkylreste, C₅- bis C₈-Cycloalkylreste oder C₇- bis C₂₀-Arylalkylreste bezeichnen, enthält, und man die Polymerisation unter Mitverwendung eines mono- oder polyfunktionellen Initiators durchführt, welcher ausgewählt ist unter organischen Hydroxyverbindungen, bei denen eine oder mehrere Hydroxylgruppen an jeweils ein sp³-hybridisiertes Kohlenstoffatom gebunden sind, organischen Halogenverbindungen, bei denen eine oder mehrere Halogenatome an jeweils ein sekundäres oder tertiäres sp³-hybridisiertes Kohlenstoffatom gebunden sind, und Wasser.

2. Verfahren nach Anspruch 1, **dadurch gekennzeichnet, dass** man Isobuten oder ein Isobuten enthaltendes Monomerengemisch in Gegenwart eines als Polymerisationskatalysator wirksamen Aluminiumtrichlorid-Donor-Komplexes polymerisiert.

3. Verfahren nach Anspruch 1 oder 2, **dadurch gekennzeichnet, dass** man einen Aluminiumtrihalogenid-Donor-Komplex oder einen Aluminumalkylhalogenid-Donor-Komplex einsetzt, bei dem die Donor-Verbindung eine Gesamt-Kohlenstoffzahl von 3 bis 16 aufweist.

4. Verfahren nach Anspruch 3, **dadurch gekennzeichnet, dass** der Initiator ausgewählt ist unter Wasser, Methanol, Ethanol, 1-Phenylethanol, 1-(p-Methoxyphenyl)ethanol, n-Propanol, Isopropanol,, 2-Phenyl-2-propanol, n-Butanol, Isobutanol,, sec.-Butanol, tert.-Butanol, 1-Phenyl-1-chlorethan, 2-Phenyl-2-chlorpropan, tert.-Butylchlorid und 1,3- oder 1,4-Bis(1-hydroxy-1-methylethyl)benzol.

5. Verfahren nach den Ansprüchen 1 bis 4, **dadurch gekennzeichnet, dass** man die Polymerisation in Gegenwart von 0,01 bis 10 mmol, jeweils bezogen auf 1 Mol eingesetztes Isobuten-Monomer bei Homopolymerisation von Isobuten bzw. auf 1 Mol der Gesamtmenge der eingesetzten polymerisationsfähigen Monomere bei Copolymerisafion von Isobuten, einer stickstoffhaltigen basischen Verbindung durchführt

6. Verfahren nach Anspruch 5, **dadurch gekennzeichnet, dass** man als stickstoffhaltige basische Verbindung Pyridin oder ein Derivat des Pyridins einsetzt.

7. Verfahren nach den Ansprüchen 1 bis 6 zur Herstellung von hochreaktiven Isobutenhomo- oder -copolymeren mit einem zahlenmittleren Molekulargewicht Mₙ (bestimmt durch Gelpermeationschromatographie) von 500 bis 250.000.

8. Verfahren nach den Ansprüchen 1 bis 7 zur Herstellung von hochreaktiven Isobutenhomo- oder -copolymeren mit einer Polydispersität von 1,05 bis weniger als 3,5.

9. Verfahren nach den Ansprüchen 1 bis 8, **dadurch gekennzeichnet, dass** man die Polymerisation bei einer Temperatur von -60°C bis -15°C durchführt.

10. Verfahren nach den Ansprüchen 1 bis 9, **dadurch gekennzeichnet, dass** man die Polymerisation in einem halogenierten aliphatischen Kohlenwasserstoff oder in einer Mischung aus halogenierten aliphatischen Kohlenwasserstoffen oder in einem Gemisch aus mindestens einem halogenierten aliphatischen Kohlenwasserstoff und mindestens einem aliphatischen, cycloaliphatischen oder aromatischen Kohlenwasserstoff als inertem Verdünnungsmittel durchführt.

## Claims

1. A process for preparing high-reactivity isobutene homo- or copolymers with a content of terminal vinylidene double bonds per polyisobutene chain end of at least 50 mol%, which comprises polymerizing isobutene or an isobutene-comprising monomer mixture in the presence of an aluminum trihalide-donor complex effective as a polymerization catalyst or of an alkylaluminum halide-donor complex, said complex comprising, as the donor, an organic compound with at least one ether function or a carboxylic ester function selected from dihydrocarbyl ethers of the general formula R¹-O-R² in which the variables R¹ and R² are each independently C₁- to C₂₀-alkyl radicals, C₅- to C₈-cycloalkyl radicals, C₆- to C₂₀-aryl radicals, and or C₇- to C₂₀-arylalkyl, and hydrocarbyl carboxylates of the general formula R³-COOR⁴ in which the variables R³ and R⁴ are each independently C₁- to C₂₀-alkyl radicals, C₅- to C₈-cycloalkyl radicals or C₇- to C₂₀-arylalkyl radicals, the polymerization and performing with additional use of a mono- or polyfunctional initiator which is selected from organic hydroxyl compounds in which one or more hydroxyl groups are each bonded to an sp³-hybridized carbon atom, organic halogen compounds in which one or more halogen atoms are each bonded to a secondary or tertiary sp³-hybridized carbon atom and water.

2. The process according to claim 1, wherein isobutene or an isobutene-comprising monomer mixture is polymerized in the presence of an aluminum trichloride-donor complex effective as a polymerization catalyst.

3. The process according to claim 1 or 2, wherein an aluminum trihalide-donor complex or an alkylaluminum halide-donor complex is used, in which the donor compound has a total carbon number of 3 to 16.

4. The process according to claim 3, wherein the initiator is selected from water, methanol, ethanol, 1-phenylethanol, 1-(p-methoxyphenyl)ethanol, n-propanol, isopropanol, 2-phenyl-2-propanol, n-butanol, isobutanol, sec.-butanol, tert-butanol, 1-phenyl-1-chloroethane, 2-phenyl-2-chloropropane, tert-butyl chloride and 1,3- or 1,4-bis(1-hydroxy-1-methylethyl)benzene.

5. The process according to claims 1 to 4, wherein the polymerization is performed in the presence of 0.01 to 10 mmol, based in each case on 1 mol of isobutene monomer used in the case of homopolymerization of isobutene or on 1 mol of the total amount of the polymerizable monomers used in the case of copolymerization of isobutene, of a nitrogen-containing basic compound.

6. The process according to claim 5, wherein the nitrogen-containing basic compound used is pyridine or a derivative of pyridine.

7. The process according to claims 1 to 6 for preparing high-reactivity isobutene homo- or copolymers with a number-average molecular weight Mₙ (determined by gel permeation chromatography) of 500 to 250 000.

8. The process according to claims 1 to 7 for preparing high-reactivity isobutene homo- or copolymers with a polydispersity of 1.05 to less than 3.5.

9. The process according to claims 1 to 8, wherein the polymerization is performed at a temperature of -60°C to -15°C.

10. The process according to claims 1 to 9, wherein the polymerization is performed in a halogenated aliphatic hydrocarbon or in a mixture of halogenated aliphatic hydrocarbons or in a mixture of at least one halogenated aliphatic hydrocarbon and at least one aliphatic, cycloaliphatic or aromatic hydrocarbon as an inert diluent.

## Revendications

1. Procédé pour la préparation d'homopolymères ou de copolymères hautement réactifs d'isobutène présentant une teneur en doubles liaisons terminales de type vinylidène par extrémité de chaîne de polyisobutène d'au moins 50% en mole, **caractérisé en ce qu'**on polymérise de l'isobutène ou un mélange de monomères contenant de l'isobutène en présence d'un complexe de trihalogénure d'aluminium-donneur ou d'un complexe d'halogénure d'alkylaluminium-donneur actif comme catalyseur de polymérisation, qui contient comme donneur un composé organique présentant au moins une fonction éther ou une fonction ester d'acide carboxylique, choisi parmi les dihydrocarbyléthers de formule générale R¹-O-R², dans laquelle les variables R¹ et R² désignent, indépendamment l'une de l'autre, des radicaux C₁-C₂₀-alkyle, C₅-C₈-cycloalkyle, C₆-C₂₀-aryle ou C₇-C₂₀-arylalkyle, et les esters d'hydrocarbyle d'acide carboxylique de formule générale R³-COOR⁴, dans laquelle les variables R³ et R⁴ désignent, indépendamment l'une de l'autre, des radicaux C₁-C₂₀-alkyle, C₅-C₈-cycloalkyle ou C₇-C₂₀-arylalkyle, et on réalise la polymérisation en utilisant conjointement un initiateur monofonctionnel ou polyfonctionnel qui est choisi parmi les composés organiques hydroxy, dans lesquels un ou plusieurs groupes hydroxyle sont à chaque fois liés à un atome de carbone hybridé en sp³, les composés organiques halogénés, dans lesquels un ou plusieurs atomes d'halogène sont à chaque fois liés à un atome de carbone secondaire ou tertiaire hybridé en sp³, et l'eau.

2. Procédé selon la revendication 1, **caractérisé en ce qu'**on polymérise de l'isobutène ou un mélange de monomères contenant de l'isobutène en présence d'un complexe de trichlorure d'aluminium-donneur actif comme catalyseur de polymérisation.

3. Procédé selon la revendication 1 ou 2, **caractérisé en ce qu'**on utilise un complexe de trihalogénure-donneur d'aluminium ou un complexe d'halogénure d'alkylaluminium-donneur, dans lequel le composé donneur présente un nombre total d'atomes de carbone de 3 à 16.

4. Procédé selon la revendication 3, **caractérisé en ce que** l'initiateur est choisi parmi l'eau, le méthanol, l'éthanol, le 1-phényléthanol, le 1-(p-méthoxyphényl)éthanol, le n-propanol, l'isopropanol, le 2-phényl-2-propanol, le n-butanol, l'isobutanol, le sec-butanol, le tert-butanol, le 1-phényl-1-chloroéthane, le 2-phényl-2-chloropropane, le chlorure de tert-butyle et le 1,3-bis(1-hydroxy-1-méthyléthyl)benzène ou le 1,4-bis(1-hydroxy-1-méthyléthyl)benzène.

5. Procédé selon les revendications 1 à 4, **caractérisé en ce qu'**on réalise la polymérisation en présence de 0,01 à 10 mmoles, à chaque fois par rapport à 1 mole de monomères d'isobutène utilisés lors de l'homopolymérisation d'isobutène ou par rapport à 1 mole de la quantité totale des monomères aptes à une polymérisation utilisés lors de la copolymérisation d'isobutène, d'un composé basique contenant de l'azote.

6. Procédé selon la revendication 5, **caractérisé en ce qu'**on utilise, comme composé basique contenant de l'azote, de la pyridine ou un dérivé de la pyridine.

7. Procédé selon les revendications 1 à 6 pour la préparation d'homopolymères ou de copolymères hautement réactifs d'isobutène présentant un poids moléculaire numérique moyen Mₙ (déterminé par chromatographie par perméation de gel) de 500 à 250 000.

8. Procédé selon les revendications 1 à 7 pour la préparation d'homopolymères ou de copolymères hautement réactifs d'isobutène présentant une polydispersité de 1,05 à moins de 3,5.

9. Procédé selon les revendications 1 à 8, **caractérisé en ce qu'**on réalise la polymérisation à une température de -60°C à -15°C.

10. Procédé selon les revendications 1 à 9, **caractérisé en ce qu'**on réalise la polymérisation dans un hydrocarbure aliphatique halogéné ou dans un mélange d'hydrocarbures aliphatiques halogénés ou dans un mélange d'au moins un hydrocarbure aliphatique halogéné et d'au moins un hydrocarbure aliphatique, cycloaliphatique ou aromatique comme diluant inerte.
